# EUROPÄISCHE PATENTSCHRIFT

(11) **EP 4 261 088 B1**
(45) Veröffentlichungstag und Bekanntmachung des Hinweises auf die Patenterteilung: **07.05.2025**
(21) Anmeldenummer: 23165611.7
(22) Anmeldetag: 30.03.2023
(51) Int. Cl.: B60T 7/20

(54) **ARRETIEREINRICHTUNG UND ABS-BREMSEINRICHTUNG**
LOCKING DEVICE AND ABS BRAKE DEVICE
DISPOSITIF DE BLOCAGE ET DISPOSITIF DE FREINAGE ABS

(30) Priorität: 13.04.2022 DE 202022102008 U; 19.12.2022 DE 102022133945
(43) Veröffentlichungstag der Anmeldung: 18.10.2023
(73) Patentinhaber: Alois Kober GmbH, 89359 Kötz (DE)
(72) Erfinder: FEUSTLE, Wolfgang, 89312 Günzburg (DE); UHL, Stefan, 89312 Günzburg (DE); VILLACIS GUTJAHR, Pavel, 89356 Konzenberg (DE); VOGLER, Fabian, 89349 Burtenbach (DE); ZIMMERMANN, Maximilian, 89522 Heidenheim-Oggenhausen (DE)
(74) Vertreter: ERNICKE Patent- und Rechtsanwälte PartmbB

(56) Entgegenhaltungen:
- EP-A1- 1 674 366
- DE-A1- 102008 041 687
- DE-A1- 19 748 230

## Beschreibung

Die Erfindung betrifft eine Arretiereinrichtung und eine ABS-Bremseinrichtung nebst Verfahren sowie einen damit ausgerüsteten Fahrzeuganhänger nebst Verwendungen mit den Merkmalen im Oberbegriff der selbstständigen Ansprüche.

Aus der DE 197 48 230 A1, DE 10 2008 041 687 A1 und DE 10 2010 002 652 A1 sind Fahrzeuganhänger bekannt, die Fahrzeugräder mit Radbremsen und eine Betriebsbremseinrichtung mit einer Auflaufbremseeinrichtung und einer beim Auflaufbremsen und bei blockierenden Fahrzeugrädern wirkenden Antiblockiersystem-Bremseinrichtung, kurz ABS-Bremseinrichtung umfassen. Die Auflaufbremseinrichtung hat einen zu den Radbremsen führenden mechanischen Bremsübertragungsstrang, der auflaufbeweglich ist. Dies bedeutet, dass der mit den Radbremsen verbundene Bremsübertragungsstrang beim Auflaufbremsen bewegt wird und eine Auflaufbewegung der Auflaufbremseinrichtung, insbesondere der mit der Anhängerkupplung verbundenen Auflaufeinrichtung, zu den angeschlossenen Radbremsen überträgt. Dies ist üblicherweise eine Zugbewegung. Der Bremsübertragungsstrang überträgt dabei Weg und Kraft zur Betätigung der Radbremsen. Die vorbekannte ABS-Bremseinrichtung weist ein oder mehrere auf die Radbremsen einwirkende ABS-Bremselemente, eine ABS-Sensorik und eine damit gekoppelte ABS-Steuerung auf. Die ABS-Sensorik erfasst abnormale Bewegungszustände der Fahrzeugräder beim Auflaufbremsen, z.B. ein Blockieren oder übermäßigen Schlupf der Fahrzeugräder. Die ein oder mehreren ABS-Bremselemente lösen und spannen im Falle einer Aktivierung der ABS-Bremseinrichtung die Radbremsen, um einen normalen Bewegungszustand der Fahrzeugräder beim Auflaufbremsen wieder herzustellen. Die ABS-Bremselemente verändern dabei die Übertragungslänge des Bremsübertragungsstrangs. Bei einer Vergrößerung der Übertragungslänge werden die Radbremsen gelöst und bei einer Verkürzung wieder gespannt.

Aus der DE 10 2015 014 315 A1 ist es bei einer konventionellen mechanischen Auflaufbremseinrichtung bekannt, beim Rückwärtsfahren des Fahrzeuganhängers den Bremsübertragungsstrang zu lösen, um ein unerwünschtes Betätigen der Radbremsen zu vermeiden und eine ungehinderte Rückwärtsfahrt zu ermöglichen. Die hierfür im mechanischen Bremsübertragungsstrang eingesetzte Kupplungseinrichtung ist nur bei Rückwärtsfahrt tätig und verhindert die Bremskraftübertragung. Bei einem Auflaufbremsen in Vorwärtsfahrt ist die Kupplungseinrichtung geschlossen und überträgt die Auflaufbewegung und die Bremskräfte. Eine ABS-Bremseinrichtung ist nicht vorhanden.

Die DE 20 2015 106 907 U1 befasst sich mit der Blockade einer Auflaufeinrichtung bei Bergabfahrt oder bei Rückwärtsfahrt im Gespannbetrieb. Eine ABS-Bremseinrichtung ist nicht angesprochen.

Die EP 3 388 297 B1 lehrt einen Fahrzeuganhänger mit elektrisch angetriebener Achse und Rekuperationsbremse sowie einer Auflaufbremseinrichtung. Beim Rekuperationsbremsen und bei Rückwärtsfahrt wird die Auflaufbremseinrichtung blockiert. Eine ABS-Bremseinrichtung ist nicht vorgesehen.

Die DE 10 2019 130 859 A1 betrifft ebenfalls einen Fahrzeuganhänger mit elektrisch angetriebener Achse und Rekuperationsbremse sowie einer Auflaufbremseinrichtung. Ein ABS-Bremsen findet nur in Verbindung mit einer entsprechenden Modulation der E-Achse und ohne Bezug auf die Auflaufeinrichtung statt. Außerdem sollen sich die Anhängerkupplung und die Auflaufeinrichtung bei einem Auflaufen des Anhängers ohne hindernde Festlegung oder Arretierung, insbesondere klemmungsfrei, bewegen können.

Aus der DE 102 27 616 B4 ist ein Fahrzeuganhänger mit einer Betriebsbremseinrichtung bekannt, die eine hydraulische Auflaufbremseinrichtung, eine elektronischhydraulische Schlingerbremseinrichtung und eine hydraulische ABS-Bremseinrichtung umfasst. Die Bremskraftübertragung erfolgt hydraulisch.

Die EP 1 674 366 A1 zeigt ebenfalls einen Fahrzeuganhänger mit einer hydraulischen Auflaufbremseinrichtung und einem hydraulischen Antiblockiersystem, welches ABS-Zylinder an jeder Radbremse umfasst.

Die DE 693 07 057 T2 betrifft einen LKW-Anhänger mit Radbremsen, die durch Druckluft betätigt werden. Ein mechanischer Bremsstrang nicht vorhanden ist.

Es ist Aufgabe der vorliegenden Erfindung, die Nutzbarkeit einer ABS-Bremstechnik bei einem besagten Fahrzeuganhänger zu verbessern.

Die Erfindung löst diese Aufgabe mit den Merkmalen in den selbstständigen Ansprüchen.

Ein erster Erfindungsaspekt betrifft die beanspruchte Arretiertechnik, d.h. die Arretiereinrichtung und ein Arretierverfahren. Diese sind für eine Betriebsbremseinrichtung vorgesehen und ausgebildet, welche eine Auflaufbremseinrichtung, eine ABS-Bremseinrichtung und einen mechanischen Bremsübertragungsstrang mit mechanischer Übertragung von Kraft und Weg bei der auflaufbedingten Betätigung umfasst.

Die Arretiertechnik ist dazu ausgebildet, mit der ABS-Bremstechnik, d.h. der ABS-Bremseinrichtung nebst ABS-Bremsverfahren, zusammenzuwirken. Der erste Erfindungsaspekt betrifft auch einen damit ausgestatteten Fahrzeuganhänger. Die beanspruchte Arretiertechnik hat verschiedene Vorteile.

Die beanspruchte Arretiertechnik kann mit einer ABS-Bremstechnik der vorgenannten und bekannten Art und einem mechanischen Bremsübertragungsstrang betrieben werden. Der mechanische Bremsübertragungsstrang kann eine Auflaufeinrichtung, einen Bremsübertrager, z.B. ein Bremsgestänge oder Bremsseil, und ggf. eine oder mehrere weitere Komponenten umfassen. Eine solche Komponente kann z.B. ein zwischen Auflaufeinrichtung und Bremsübertrager angeordneter Umsetzer, z.B. ein schwenkbarer Umlenkhebel, oder ein dem Bremsübertrager nachgeschalteter Bremsverteiler, z.B. ein Waagbalken, zum Anschluss von Bremszügen sein.

Die ABS-Bremseinrichtung und deren ABS-Bremsfunktion werden bei Detektion abnormaler Bewegungszustände durch die ABS-Sensorik aktiviert und bei Eintreten und sensorischer Detektion normaler Bewegungszustände wieder deaktiviert. Beim ABS-Bremsen oder Stotterbremsen und bei z.B. blockierenden Fahrzeugrädern werden eine oder mehrere Radbremsen gelöst und wieder gespannt, was einmal oder mehrmals erfolgen kann. Dies kann geregelt in Abhängigkeit vom Blockierverhalten von ein oder mehreren Fahrzeugrädern und von entsprechenden Signalen der ABS-Sensorik geschehen.

Die Arretiereinrichtung ist dazu ausgebildet, beim ABS-Bremsen den mechanischen Bremsübertragungsstrang zu arretieren. Die Arretiereinrichtung kann zusätzlich zu den ABS-Bremselementen vorhanden und angeordnet sein. Die Arretiereinrichtung kann zusätzlich und eigenständig wirken.

Im ABS-Bremsfall blockiert z.B. die Arretiertechnik die Übertragung der Auflaufbewegung und der Bremskräfte zu dem oder den ABS-Bremselementen. Das oder die ABS-Bremselemente brauchen daher beim ABS-Bremsen nicht gegen die Auflaufkraft und gegen die auflaufende Masse des Fahrzeuganhängers zu arbeiten. Dies ist besonders beim Lösen und erneuten Spannen der Radbremsen von Vorteil. Ein solches Spannen kann bis zu der von der Auflaufbremseinrichtung im ABS-Bremsfall erzeugten Bremskraft führen oder kann diese auch übersteigen.

Außerdem wird beim Lösen der Radbremsen im ABS-Bremsfall ein Nachsetzen der Auflaufbremseinrichtung von der Arretiertechnik verhindert, z.B. bei einem weiter andauernden Auflaufen des Fahrzeuganhängers am Zugfahrzeug. Dies ist besonders bei den vorbekannten ABS-Bremselementen mit einer Veränderung der Übertragungslänge des Bremsübertragungsstrangs von Vorteil.

Die beanspruchte Arretiertechnik kann vorteilhafterweise verhindern oder zumindest erschweren, dass die beim Lösen der Radbremsen eintretende Vergrößerung der besagten Übertragungslänge durch eine Nachsetzbewegung der Auflaufeinrichtung und des Bremsübertragungsstrangs aufgezehrt wird. Andererseits brauchen das oder die ABS-Bremselemente den arretierten Bremsübertragungsstrang auch nicht gegen die Auflaufbewegung zurückschieben. Das besagte Lösen der Radbremsen kann ein vollständiges oder teilweises Lösen bzw. Lockern der Radbremsen beinhalten.

Die Arretiereinrichtung kann mit der ABS-Bremseinrichtung, insbesondere deren ABS-Steuerung, steuertechnisch verbunden werden und kann hiervon gesteuert werden. Die Arretiereinrichtung kann z.B. von der ABS-Steuerung Signale empfangen bzw. gesteuert werden. Die Arretiereinrichtung kann dabei z.B. direkt von der ABS-Steuerung fremdgesteuert werden. Sie kann andererseits in Abhängigkeit von Signalen der ABS-Steuerung eigengesteuert sein. Die Signale können insbesondere über eine Aktivierung und Deaktivierung der ABS-Bremseinrichtung informieren. Die steuertechnische Verbindung ist in diesem Fall als Signalverbindung ausgebildet.

Die Arretiereinrichtung kann in Gespannfahrt und in Abgängigkeit vom Aktivierungszustand der ABS-Bremseinrichtung tätig werden.

Die Arretiereinrichtung arretiert den mechanischen Bremsübertragungsstrang und dessen Auflaufbewegung bei einer Aktivierung der ABS-Bremseinrichtung und gibt den Bremsübertragungsstrang bei einer Deaktivierung der ABS-Bremseinrichtung wieder frei. Die Aktivierung der ABS-Bremseinrichtung und ihrer ein oder mehreren ABS-Bremselemente kann bei Auftreten und Detektion der vorgenannten abnormalen Bewegungszustände der Fahrzeugräder erfolgen. Die nachfolgende Deaktivierung kann bei Auftreten und Detektion normaler Bewegungszustände der Fahrzeugräder erfolgen.

Im normalen Auflaufbremsbetrieb bei nicht aktivierter ABS-Bremseinrichtung und normalem Bremsverhalten der Fahrzeugräder kann die Arretiereinrichtung unwirksam sein, wobei das Auflaufbremsen unbeeinflusst stattfinden kann und der auflaufbewegliche Bremsübertragungsstrang Weg und Bremskraft zu den angeschlossenen Radbremsen übertragen kann. Beim ungebremsten Gespann-Fahrbetrieb in Vorwärtsfahrt kann die Arretiereinrichtung ebenfalls unwirksam sein.

Die Arretiereinrichtung kann dazu ausgebildet sein, am Bremsübertragungsstrang strangaufwärts von den ein oder mehreren ABS-Bremselementen angeordnet zu werden. Diese Anordnung am Bremsübertragungsstrang ist funktionell zu verstehen und bedeutet, dass die Arretiereinrichtung an einem Strangteil des Bremsübertragungsstrangs angeordnet ist und einwirkt, welches in Strangrichtung vor den ein oder mehreren ABS-Bremselementen eine die Auflaufkraft und Auflaufbewegung übertragende Funktion ausübt. Ein solches Strangteil kann sich zumindest bereichsweise örtlich vor bzw. strangaufwärts von den ein oder mehreren ABS-Bremselementen befinden. Ein solches Strangteil kann z.B. die Auflaufeinrichtung und/oder der Bremsübertrager sein.

Der Bremsübertrager kann z.B. in Strangrichtung örtlich vor den ein oder mehreren ABS-Bremselementen enden. Die Arretiereinrichtung kann dementsprechend ebenfalls örtlich vor den ein oder mehreren ABS-Bremselementen positioniert werden. Der Bremsübertrager kann sich aber auch in Strangrichtung weiter erstrecken und kann an oder hinter der Einwirkstelle der ein oder mehreren ABS-Bremselemente enden. In diesem Fall kann die Arretiereinrichtung am Bremsübertrager örtlich vor den ein oder mehreren ABS-Bremselementen oder auch am Endbereich des Bremsübertragers und dabei an oder hinter den ein oder mehreren ABS-Bremselementen positioniert werden.

Die Arretiereinrichtung kann für eine Abstützung am Fahrzeuganhänger vorgesehen und ausgebildet sein. Dies ist in unterschiedlicher Weise möglich. Die Abstützstelle kann sich z.B. in Strangrichtung vor den ein oder mehreren ABS-Bremselementen befinden. Die Arretiereinrichtung kann hieran adaptiert sein und kann insbesondere für eine eigenständige Abstützung am Fahrzeuganhänger konzipiert sein. Die Abstützstelle kann sich aber auch in Strangrichtung an oder hinter den ein oder mehreren ABS-Bremselementen befinden. Die ein oder mehreren ABS-Bremselemente und die Arretiereinrichtung können eigene, eng benachbarte Abstützstellen oder eine gemeinsame Abstützstelle haben. Die Arretiereinrichtung kann hieran angepasst sein. Sie kann auch mit der ABS-Bremseinrichtung zu einer Baueinheit kombiniert sein. Diese Konfiguration hat Vorteile für eine kompakte und störungsarme Bauform sowie für eine Optimierung einer gemeinsamen Abstützung, z.B. an einer Achse des Fahrzeuganhängers.

Die Arretierung des Bremsübertragungsstrangs und seiner besagten Auflaufbewegung erleichtert beim ABS-Bremsen die Löse- und Spannbewegung der strangabwärts angeordneten ein oder mehreren ABS-Bremselemente. Diese können sich im Bereich zwischen Arretiereinrichtung und Radbremsen befinden. Die Erleichterung besteht hinsichtlich Kraft und Weg.

Die beanspruchte Arretiertechnik, insbesondere die Arretiereinrichtung, ist eine eigenständig handelbare und nutzbare Einheit. Die Arretiertechnik kann an vorhandener ABS-Bremstechnik und auch an damit ausgerüsteten Fahrzeuganhängern nachgerüstet werden. Die Arretiertechnik kann auch bei einer ABS-Bremstechnik und ggf. damit ausgestatteten Fahrzeuganhängern herstellerseitig implementiert sein. Andererseits können aus anderen Gründen anhängerseitig vorhandene Arretiereinrichtung für ein ABS-Bremsen genutzt und mit einer ABS-Steuerung verbunden sowie von dieser gesteuert werden.

Die beanspruchte Arretiertechnik ist für unterschiedlichste Arten von ABS-Bremstechnik, insbesondere ABS-Bremseinrichtungen und ABS-Bremselementen, einsetzbar. Dies können z.B. die beim eingangs genannten Stand der Technik eingesetzten ABS-Bremselemente mit Veränderung der Bremsübertragungslänge sein. Diese ABS-Bremselemente können in Reihe mit dem Bremsübertragungsstrang geschaltet sein.

Eine besondere Eignung besteht für eine ABS-Bremseinrichtung mit ein oder mehreren ABS-Bremselementen, die parallel zum mechanischen Bremsübertragungsstrang geschaltet sind. Diese können z.B. an einem oder an mehreren Widerlagern von Bremszugmänteln der zu den Radbremsen führenden Bremszüge angreifen. Eine solche Ausbildung einer ABS-Bremstechnik, insbesondere einer ABS-Bremseinrichtung und ihrer ABS-Bremselemente, hat eigenständige erfinderische Bedeutung. Dies ist ein zweiter Erfindungsaspekt, der mit dem oder ohne den ersten Erfindungsaspekt der Arretiertechnik eingesetzt werden kann.

In einem dritten Erfindungsaspekt kann die ABS-Bremstechnik mit einer Schlingerbremstechnik, d.h. einer Schlingerbremseinrichtung und einem Schlingerbremsverfahren, kombiniert werden. Die ABS-Bremstechnik und die Schlingerbremstechnik können gemeinsam an einer Stelle des mechanischen Bremsübertragungsstrangs angreifen. Sie können einen gemeinsamen Aktor umfassen. Dieser ebenfalls eigenständige dritte Erfindungsaspekt kann wiederum mit oder ohne den ersten Erfindungsaspekt der Arretiertechnik eingesetzt werden.

Die sog. Schlingerbremstechnik, d.h. die Schlingerbremseinrichtung und das Schlingerbremsverfahren, betreffen eine vorrichtungs- und verfahrenstechnische Stabilisierungstechnik für den Fahrzeuganhänger in Gespannfahrt. Die Schlingerbremstechnik ist dazu vorgesehen und ausgebildet, während der Gespannfahrt ggf. auftretende instabile Fahrzustände des Fahrzeuganhängers zu erkennen und durch entsprechende gesteuerte oder geregelte Betätigung von einer oder mehreren Radbremsen zu beheben. Die Schlingerbremseinrichtung kann ein oder mehrere Schlingerbremselemente, eine Schlingerbremssteuerung und eine Schlingersensorik umfassen. Die Schlingerbremseinrichtung kann am mechanischen Bremsübertragungsstrang angeordnet sein und einwirken.

Instabile Fahrzustände können z.B. seitliche Schleuderbewegungen des Fahrzeuganhängers um den Ankuppelpunkt an der Anhängerkupplung und um eine dortige Hochachse betreffen. Es ist möglich, dass außer dem Fahrzeuganhänger auch das Zugfahrzeug Schleuderbewegungen ausführt, wodurch der besagte Ankuppelpunkt quer zur Fahrtrichtung bewegt wird und die Schleuderbewegungen des Fahrzeuganhängers entsprechend komplexer werden. Ferner kann einem Rollen oder Wanken des Fahrzeuganhängers um seine Längsachse oder einem Nicken des Fahrzeuganhängers um seine Querachse durch die Schlingerbremseinrichtung entgegengewirkt werden.

Besondere Vorteile ergeben sich, wenn die ein oder mehreren ABS-Bremselemente und die ein oder mehreren Schlingerbremselemente gemeinsam an ein oder mehreren Widerlagern von Bremszugmänteln angreifen und diese(s) verschieben. Bei einem ABS-Bremsen können zum Lösen der Radbremsen das oder die Widerlager weggeschoben und von den Radbremsen entfernt werden. Beim Schlingerbremsen werden das oder die Widerlager angezogen und in Richtung zu den Radbremsen bewegt. In einer besonders vorteilhaften Ausführung können die ABS-Bremseinrichtung und die Schlingerbremseinrichtung einen gemeinsamen Aktor und/oder eine gemeinsame Steuerung aufweisen.

Die Arretiereinrichtung kann beim kombinierten ABS-Bremsen und Schlingerbremsen ebenfalls wirksam sein und kann den Betätigungsstrang sowie die Auflaufbremseinrichtung vorsorglich blockieren.

Die beanspruchte Arretiereinrichtung kann unterschiedlich ausgebildet und an unterschiedlichen Stellen einer Auflaufbremseinrichtung, insbesondere des Bremsübertragungsstrangs, angeordnet werden. Sie kann hierfür eine geeignete Ausbildung aufweisen.

Die Arretiereinrichtung kann z.B. am Bremsübertrager und/oder an der Auflaufvorrichtung angeordnet werden. Bei einem Bremsübertrager ist z.B. die Anordnung an einem Umlenkhebel und/oder an einem Bremsgestänge oder Bremsseil möglich. Bei der Zuordnung zu einer Auflaufvorrichtung kann eine Arretiereinrichtung z.B. an einer Auflaufstange angeordnet sein. In einer anderen Variante kann die Arretiereinrichtung an einem Bremsverteiler, z.B. einem Waagbalken, angeordnet sein, der sich z.B. am stangabwärtigen Endbereich des Bremsübertragers befindet.

Die Arretiereinrichtung ist dazu ausgebildet, von der ABS-Bremseinrichtung, insbesondere der ABS-Steuerung, gesteuert zu werden. Insbesondere kann die Arretierfunktion in Abhängigkeit von Signalen der ABS-Steuerung ein- und ausgeschaltet werden. Die Arretiereinrichtung kann in ihrer Arretierwirkung auch graduell gesteuert werden, wobei die Arretierwirkung zwischen einer völligen Arretier-Blockade und einem Arretier-Bremsen des mechanischen und auflaufbeweglichen Bremsübertragungsstrangs variieren kann. Ein Arretier-Bremsen kann geringfügige Bewegungen des Bremsübertragungsstrangs und eine reduzierte Kraftübertragung erlauben.

Die Arretiereinrichtung kann ein steuerbares Arretiermittel umfassen, welches formschlüssig und/oder kraftschlüssig auf den mechanischen Bremsübertragungsstrang einwirken kann. Das Arretiermittel ist dazu vorgesehen und ausgebildet, am Bremsübertragungsstrang in der besagten Weise strangaufwärts von den ein oder mehreren ABS-Bremselementen angeordnet zu werden. Hierfür gibt es verschiedene Möglichkeiten. Das Arretiermittel ist dazu vorgesehen und ausgebildet, am Fahrzeuganhänger abgestützt zu werden. Das Arretiermittel kann in der erwähnten Weise dazu ausgebildet sein, von der ABS-Steuerung gesteuert zu werden. Die Arretiereinrichtung kann auch eine eigene Steuereinheit umfassen.

Die Arretiereinrichtung kann ein oder mehrere solcher Arretiermittel aufweisen. Bei einer Mehrfachanordnung können die Arretiermittel an unterschiedlichen Stellen des Bremsübertragungsstrangs angeordnet sein. Bei üblichen Auflaufbremseinrichtungen mit einem Bremsverteiler, insbesondere einem Waagbalken, ist eine Anordnung von ein oder mehreren Arretiermitteln strangaufwärts und im Bereich zwischen dem Bremsverteiler und einer mit der Auflaufvorrichtung verbundenen Anhängerkupplung vorteilhaft.

In einer vorteilhaften Ausgestaltung kann die Arretiereinrichtung ein eigenes Stützmittel zum Anbau und zur Abstützung am Fahrzeuganhänger aufweisen. Mit dem Stützmittel können insbesondere die einzeln oder mehrfach vorhandenen Arretiermittel am Fahrzeuganhänger an geeigneter Stelle positioniert und abgestützt werden. In einer anderen Ausführungsform kann die Arretiereinrichtung an der ABS-Bremseinrichtung angeordnet und abgestützt sein.

Das Arretiermittel kann ein relativ zum Bremsübertragungsstrang bewegliches Arretierelement und eine steuerbare Stellvorrichtung umfassen. Die steuerbare Stellvorrichtung kann z.B. ein Elektromagnet sein. Sie bringt gesteuert das bewegliche Arretierelement in eine Arretierverbindung mit dem Bremsübertragungsstrang und hebt die Arretierverbindung wieder auf. Eine Ansteuerung der Stellvorrichtung kann z.B. über die ABS-Steuerung oder über eine eigene Steuereinheit erfolgen.

Ein Arretierelement kann z.B. ein Rastmittel aufweisen. Dieses kann kraftschlüssig und/oder formschlüssig auf den Bremsübertragungsstrang, insbesondere den Bremsübertrager, einwirken. In einer vorteilhaften Ausgestaltung weist das Rastmittel eine Verzahnung auf. Das Arretiermittel kann ein am Bremsübertragungsstrang, insbesondere am Bremsübertrager, montierbares Gegenrastmittel aufweisen. Dies kann ebenfalls eine Verzahnung besitzen. In einer anderen Ausführung kann ein z.B. gabelförmiges Arretiermittel temporär und z.B. formschlüssig einen Bremsverteiler hintergreifen und so ein Nachsetzen der Auflaufbremseinrichtung verhindern.

Die Arretiereinrichtung kann ein dem Arretiermittel zugeordnetes Lösemittel umfassen. Das Lösemittel kann z.B. als Feder ausgestaltet sein. Es kann der Stellvorrichtung entgegenwirken. Das Lösemittel kann z.B. ein automatisches Lösen des Arretiermittels bei Ausfall der steuerbaren Stellvorrichtung bewirken. Die steuerbare Stellvorrichtung kann zum Arretieren gegen das Lösemittel, insbesondere die Feder, arbeiten. Das Lösemittel kann bei Ausfall einer Energieversorgung, Störung der Steuerverbindung zur ABS-Bremseinrichtung oder einer sonstigen Störung der steuerbaren Stellvorrichtung eine Freigabe des Bremsübertragungsstrangs bewirken. Die Auflaufbremseinrichtung ist dadurch in Störfällen uneingeschränkt wirksam. Dies ist wichtig für den sicheren Anhängerbetrieb in Gespannfahrt.

Die Arretiereinrichtung kann ein Kommunikationsmittel zur Kommunikation mit der ABS-Bremseinrichtung, insbesondere der ABS-Steuerung, umfassen. Das Kommunikationsmittel kann leitungsgebunden oder drahtlos ausgebildet sein. Es kann z.B. eine Kabelverbindung und ggf. Anschlussstellen an der ABS-Bremseinrichtung, insbesondere der ABS-Steuerung, und an einem Arretiermittel aufweisen. Bei einer drahtlosen Ausführung können Sende- und Empfängereinheiten an der ABS-Bremseinrichtung, insbesondere der ABS-Steuerung, und an einem Arretiermittel vorhanden sein. Diese können z.B. per Funk, insbesondere Bluetooth, oder auf optischer Basis, z.B. mittels Infrarot, oder auf andere Weise drahtlos miteinander kommunizieren.

Die Arretiereinrichtung kann ferner ein Steuermodul für eine ABS-Steuerung umfassen. Dieses kann hardwaremäßig und/oder softwaremäßig ausgebildet sein. Das Steuermodul kann z.B. bei einer vorhandenen ABS-Steuerung nachträglich implementiert werden. Hierüber kann die vorhandene ABS-Steuerung für ein Zusammenwirken mit der Arretiertechnik adaptiert und aufgerüstet werden. Die besagte steuertechnische Verbindung kann mit dem Steuermodul hergestellt werden.

Die Arretiereinrichtung kann auch eine vorerwähnte eigene Steuereinheit umfassen. Diese kann an einem Arretiermittel oder separat angeordnet sein und kann leitungsgebunden oder drahtlos mit der ABS-Steuerung oder mit einem ggf. nachgerüsteten Steuermodul kommunizieren.

Die beanspruchte Arretiertechnik lässt sich an vorhandenen Betriebsbremseinrichtungen der eingangs genannten Art nachrüsten. Hierbei können vorhandene Komponenten dieser Betriebsbremseinrichtungen benutzt werden. Dies kann eine bereits vorhandene ABS-Steuerung sein. Andererseits kann auch eine aus anderweitigen Gründen vorhandene Blockiereinrichtung genutzt werden, die z.B. in der vorbekannten Weise für eine Rekuperationsbremse und/oder eine Rückfahrautomatik mit Blockade der Auflaufbremsung bei Rückwärtsfahrt im Gespannbetrieb von Fahrzeuganhänger und Zugfahrzeug eingesetzt wird.

Bei einer solchen Verwendung vorhandener Komponenten kann die beanspruchte Arretiertechnik im Minimalfall ein Steuermodul für eine vorhandene ABS-Steuerung und ein Kommunikationsmittel zur Herstellung einer steuertechnischen Kommunikationsverbindung zwischen einer vorhandenen ABS-Steuerung und einem ggf. vorhandenen Blockademittel umfassen.

Es ist andererseits möglich, eine Betriebsbremseinrichtung der vorbekannten Art mit einer ABS-Bremstechnik und einem Kommunikationsmittel im Wege der Nachrüstung oder Erstausrüstung auszustatten. Hierdurch kann eine Kombination der beanspruchten Arretiertechnik und einer ABS-Bremstechnik unter Nutzung eines bereits vorhandenen und anderweitig eingesetzten Blockademittels gebildet werden.

Andererseits ist es möglich, die beanspruchte Arretiertechnik neben der ABS-Unterstützung auch zu anderen zusätzlichen Zwecken einzusetzen und zu verwenden. Die Arretiereinrichtung kann z.B. für eine Arretierung des Bremsübertragungsstrangs bei einer Rückwärtsfahrt des Fahrzeuganhängers im Gespannbetrieb mit einem Zugfahrzeug benutzt werden. Für die Detektion einer Rückwärtsfahrt kann eine geeignete Erfassungseinrichtung eingesetzt werden, die z.B. eine Radsensorik zur Detektion einer Rückwärtsdrehung der Fahrzeugräder beinhaltet. Alternativ kann eine Radareinheit oder eine beliebige andere Erfassungstechnik eingesetzt werden. Für diesen und andere Zusatzzwecke ist es günstig, wenn die Arretiereinrichtung eine eigene Steuereinheit umfasst oder wenn ein Steuermodul für eine ABS-Steuerung entsprechende Zusatzfunktionen bereitstellt. Außerdem ist dann eine Kommunikationsverbindung mit der Erfassungseinrichtung vorhanden.

Die beanspruchte Arretiertechnik kann mit konventionellen und mittels eines Zugfahrzeugs fremdbewegten Fahrzeuganhängern eingesetzt werden, die nicht über eine eigene im Gespannbetrieb angetriebene Achse mit ein oder mehreren Antriebsmotoren und evtl. einer Rekuperationsbremse ausgerüstet sind und die ansonsten die besagte Betriebsbremseinrichtung mit Auflaufbremseinrichtung und einem mechanischen und auflaufbeweglichen Bremsübertragungsstrang aufweisen.

Mit der beanspruchten Arretiertechnik können dabei eine eventuelle Rekuperationsbremse und die Batterieaufladung an einem Zugfahrzeug unterstützt werden, indem die anhängerseitige Auflaufbremseinrichtung und der Bremsübertragungsstrang bei Unterschreiten eines vorgegebenen Verzögerungswerts vollständig oder teilweise arretiert werden. Hierfür kann die Arretiertechnik auch eine Erkennungseinrichtung für die Existenz einer Rekuperationsbremse beim Zugfahrzeug umfassen. Zudem kann eine eigene Dynamikerfassungstechnik vorhanden sein, mit der die Verzögerung des Fahrzeuganhängers und das Unterschreiten oder Überschreiten des vorgegeben Verzögerungswerts erfasst werden. Ein Überschreiten des Vorgabewerts und eine übermäßigen Verzögerung des Fahrzeuganhängers, die eine zugfahrzeugseitige Bremsung nicht mehr auffangen kann, könnten zu unkontrollierten Anhängerbewegungen führen. In einem solchen Fall wird aus Sicherheitsgründen die Arretiereinrichtung wieder gelöst und die Auflaufbremseinrichtung nebst Bremsübertragungsstrang freigegeben. Die ABS-Bremsfunktion bleibt dabei gewahrt. Hierdurch kann sichergestellt werden, dass in sämtlichen Fahrsituationen der Fahrzeuganhänger korrekt und beim Auflaufbremsen bedarfsweise mit ABS-Unterstützung gebremst werden kann.

Die beanspruchte Arretiertechnik lässt sich auch bei Fahrzeuganhängern einsetzen und verwenden, die eine eigene im Gespannbetrieb angetriebene Achse mit ein oder mehreren Antriebsmotoren und evtl. eine Rekuperationsbremse sowie eine Auflaufbremseinrichtung haben. Hier kann ebenfalls das Auflaufbremsen bedarfsweise mit ABS-Unterstützung erfolgen.

Für eine ABS-Bremseinrichtung gemäß des zweiten Erfindungsaspektes ist es günstig, wenn ein ABS-Bremselement einen steuerbaren Aktor aufweist, der an einem zu einer Radbremse führenden Bremszug oder an einem Bremsbetätiger in oder an einer Radbremse angeordnet werden kann und einwirken kann sowie hierfür entsprechend ausgebildet ist. Bei der besagten ABS-Bremseinrichtung ist es ferner günstig, wenn die ABS-Sensorik Radsensoren umfasst.

Es ist für die besagte ABS-Bremseinrichtung besonders vorteilhaft, wenn das ein oder mehrfach vorhandene ABS-Bremselement, insbesondere dessen steuerbarer oder regelbarer Aktor, an einem Widerlager eines Bremszugmantels eines als Bowdenzug ausgebildeten Bremszugs angeordnet ist und einwirkt sowie hierfür entsprechend ausgebildet ist. Der besagte Aktor kann einen mit der ABS-Steuerung verbundenen Antrieb und ein am Bremszug oder am Bremsbetätiger einwirkfähiges, angetriebenes Stellmittel umfassen. Der Aktor, insbesondere das Stellmittel, können dazu ausgebildet sein, an einem gemeinsamen Widerlager oder an einem individuellen Widerlager der Bremszüge einzuwirken und dieses zu bewegen. Der Aktor bzw. das besagte Stellmittel können entsprechend einzeln oder mehrfach vorhanden sein.

Ferner ist es für einen gesteigerten Funktionsumfang der Betriebsbremseinrichtung und des damit ausgestatteten Fahrzeuganhängers vorteilhaft, wenn die ABS-Bremseinrichtung mit einer Schlingerbremseinrichtung kombiniert ist. Die Schlingerbremseinrichtung kann ohne Auflaufbremsung wirken. Sie kann auch bei einer Auflaufbremsung in Kraft treten und kann die Auflaufbremseinrichtung überlagern.

Andererseits kann ein ABS-Bremsen auch beim Schlingerbremsen und dabei auftretenden abnormalen Bewegungszuständen von ein oder mehreren Anhängerrädern stattfinden. Dies erlaubt ein hochwirksames Schlingerbremsen mit hohen Bremskräften unabhängig vom Beladezustand und der aktuellen Masse des Fahrzeuganhängers.

Bei der Kombination können die ABS-Bremseinrichtung und die Schlingerbremseinrichtung an unterschiedlichen Stellen des Fahrzeuganhängers angeordnet werden und können getrennt voneinander wirken. Sie können auch gemeinsam an gleicher Stelle angeordnet werden und gemeinsam hier wirken.

Die ABS-Bremseinrichtung und ggf. die Schlingerbremseinrichtung können jeweils strangabwärts von der ggf. vorhandenen Arretiereinrichtung am Bremsübertragungsstrang wirken. Dies kann an getrennten Stellen und in getrennter Weise erfolgen. Besonders günstig ist es, wenn die ABS-Bremseinrichtung und die Schlingerbremseinrichtung an gleicher Stelle gemeinsam wirken und einen gemeinsamen Aktor aufweisen.

Die ABS-Bremseinrichtung und die Schlingerbremseinrichtung können jeweils eigenständig ausgebildet sein. Sie können auch jeweils eine eigene ABS-Steuerung bzw. Schlingerbremssteuerung haben. Es ist von besonderem Vorteil, wenn die ABS-Bremseinrichtung und die Schlingerbremseinrichtung eine gemeinsame Steuerung aufweisen. Ein gemeinsamer Aktor und eine ggf. gemeinsame Steuerung sind von speziellem Vorteil, wenn die ABS-Bremseinrichtung auch beim Schlingerbremsen eingesetzt wird. Es ist günstig, wenn die ABS-Bremseinrichtung und die Schlingerbremseinrichtung gemeinsam zur Anordnung und Einwirkung an einem zu einer Radbremse führenden Bremszug oder an einem Bremsbetätiger in einer Radbremse ausgebildet sind. Ein gemeinsames Einwirken der ABS-Bremseinrichtung und der Schlingerbremseinrichtung an einem gemeinsamen Widerlager oder an individuellen Widerlagern der Bremszüge ist dabei von besonderem Vorteil.

Die ABS-Bremseinrichtung und die Schlingerbremseinrichtung können dazu ausgebildet sein, das gemeinsame Widerlager oder die individuellen Widerlager ausgehend jeweils von einer zum Auflaufbremsen definierten und ggf. fixierbaren Null-Stellung zum ABS-Bremsen und zum Schlingerbremsen nach entgegengesetzten Betätigungsrichtungen zu bewegen. Durch Angriff am Bremszugmantel und dessen Widerlager kann sowohl eine ABS-Bremsung, als auch eine Schlingerbremsung durchgeführt werden.

Die ABS-Bremsung kann beim Auflaufbremsen und ggf. auch beim Schlingerbremsen wirken. Beim Schlingerbremsen kann bei Auftreten von abnormalen Bewegungszuständen der Fahrzeugräder, z.B. Blockieren oder Schlupf oder dgl., die Schlingerbremswirkung bzw. die Bremskraft des bevorzugt gemeinsamen Aktors reduziert werden, was ebenfalls durch Bewegung des gemeinsamen oder individuellen Widerlagers erfolgen kann. Mit einem gemeinsamen Widerlager können mehrere Bremszüge und Radbremsen gemeinsam betätigt werden. Wenn die Radbremsen und ihre Bremszüge jeweils ein eigenes individuelles Widerlager haben, können die ABS-Bremseinrichtung und die Schlingerbremseinrichtung jeweils einzeln und individuell auf eine Radbremse einwirken. Die ein oder mehreren anderen Radbremsen können dabei nicht oder in anderer Weise betätigt werden. Hierdurch kann auf unterschiedliche Bewegungszustände der linken und rechten Fahrzeugräder eingegangen werden.

Die vorgenannte Schlingerbremseinrichtung kann eine eigene Schlingersensorik umfassen, mit der die vorerwähnte Schleuderbewegung um den Ankuppelpunkt und die Hochachse und auch eine komplexere Schleuderbewegung der vorgenanten Art detektiert werden können. Die Schlingersensorik kann hierfür z.B. einen Gierratensensor und einen Querbeschleunigungssensor umfassen. Diese können getrennt angeordnet oder zu einer Sensoreinheit zusammengefasst werden, z.B. zu einem ESP-Sensor. Die Schlingersensorik kann auch ein oder mehrere Sensoren zur Detektion der besagten Roll- oder Wankbewegungen und/oder Nickbewegungen umfassen.

In einem vierten eigenständigen Erfindungsaspekt kann die ABS-Bremseinrichtung einen am Fahrzeuganhänger abstützbaren Träger aufweisen, an dem sowohl die ein oder mehreren ABS-Bremselemente, als auch die Arretiereinrichtung mit einem steuerbaren Arretiermittel angeordnet sind. Das Arretiermittel kann in der vorbeschrieben Weise zur Einwirkung auf einen Bremsübertrager, z.B. ein Bremsgestänge, des mechanischen und auflaufbeweglichen Bremsübertragungsstrangs ausgebildet sein. Die Arretiereinrichtung kann mit der ABS-Bremseinrichtung, insbesondere der ABS-Steuerung, steuertechnisch verbunden sein.

Die ABS-Bremseinrichtung gemäß des vierten eigenständigen Erfindungsaspekts kann ansonsten generell für einen Fahrzeuganhänger in Gespannfahrt vorgesehen und ausgebildet sein, wobei der Fahrzeuganhänger Fahrzeugräder mit Radbremsen und eine Auflaufbremseinrichtung mit einem zu den Radbremsen führenden mechanischen und auflaufbeweglichen Bremsübertragungsstrang aufweist, wobei die ABS-Bremseinrichtung beim Auflaufbremsen und blockierenden Fahrzeugrädern wirkfähig ist und ein oder mehrere auf die Radbremsen einwirkende ABS-Bremselemente, eine ABS-Sensorik und eine ABS-Steuerung umfasst, wobei die ein oder mehreren ABS-Bremselemente bei einer Aktivierung der ABS-Bremseinrichtung die Radbremsen lösen und spannen. Die ABS-Bremseinrichtung gemäß des vierten eigenständigen Erfindungsaspekts kann auch mit ein oder mehreren der vorgenannten anderen Erfindungsaspekte kombiniert werden. Dies ist vorteilhaft, aber nicht zwingend erforderlich.

Diese Ausführungsform der ABS-Bremseinrichtung mit dem am Fahrzeuganhänger abstützbaren gemeinsamen Träger für ein oder mehrere ABS-Bremselemente und für die Arretiereinrichtung hat einen verringerten Bauaufwand und ist besonders effizient sowie kostengünstig. Sie baut besonders platzsparend und kann einfach sowie kinematisch günstig am Fahrzeuganhänger, insbesondere an einem Achskörper, fest montiert werden. Die ABS-Steuerung kann ebenfalls am gemeinsamen Träger angeordnet werden. Der Träger kann ein z.B. balkenartiges Basisteil und einen Beschlag zur besagten chassisfesten Montage aufweisen.

Ein ABS-Bremselement kann einen am Träger angeordneten, steuerbaren oder regelbaren Aktor aufweist, der zur Anordnung und Einwirkung an einem zu einer Radbremse führenden Bremszug, insbesondere zur Anordnung und Einwirkung an einem Widerlager eines Bremszugmantels eines als Bowdenzug ausgebildeten Bremszugs, ausgebildet sein. Der Aktor kann einen am Träger stationär angeordneten Antrieb und ein am Träger beweglich, insbesondere verschieblich, gelagertes Stellmittel umfassen. Die besagte Anordnung und Lagerung können jeweils am z.B. balkenartigen Basisteil erfolgen. Das Stellmittel kann vorteilhafterweise mit einem Widerlager eines Bremszugmantels eines als Bowdenzug ausgebildeten Bremszugs verbindbar oder verbunden sein.

Die Arretiereinrichtung, insbesondere das steuerbare Arretiermittel, kann in Richtung zur Auflaufvorrichtung vor dem Aktor, insbesondere vor dessen Antrieb, angeordnet sein. Das Stellmittel kann ein mit dem Antrieb wirkverbundenes Treibmittel, insbesondere eine Gewindespindel, und einen damit gekoppelten Bewegungsübertrager, z.B. einen Schlitten, umfassen, welcher ein Widerlager trägt. Das bewegliche Stellmittel kann am trägerfesten Arretiermittel entlanng und an diesem vorbei bewegt werden.

Das ABS-Bremselement kann in der vorbeschriebenen Weise einzeln oder mehrfach vorhanden sein. Kinematisch und bautechnisch günstig ist eine Einzelanordnung, wobei z.B. das einzelne Stellmittel ein gemeinsames Widerlager für die Bremsmäntel der Bremszüge trägt.

Der Träger, insbesondere das Basisteil, kann ein Aufnahmeelement, z.B. eine Aufnahmekammer und eine axiale Durchtrittsöffnung, für das Arretierelement und einen arretierfähigen Endbereich des Bremsübertragungsstrangs, insbesondere des Bremsübertragers, umfassen. Der Bremsübertragungsstrang, insbesondere der Bremsübertrager, kann entsprechend adaptiert sein, wobei sich z.B. der Bremsübertrager über den Bremsverteiler hinaus bis zum ABS-Bremseinrichtung erstrecken und dort bedarfsweise arretiert werden kann. Der adaptierte Bremsübertragungsstrang, insbesondere Bremsübertrager, kann ein Bestandteil der ABS-Bremseinrichtung sein.

Die ABS-Bremseinrichtung mit dem gemeinsamen Träger kann ebenfalls mit einer Schlingerbremseinrichtung kombiniert und ggf. auch integral mit gemeinsamem Aktor etc. ausgebildet sein.

Der beanspruchte Fahrzeuganhänger kann entsprechend der vorgenannten mehreren eigenständigen Erfindungsaspekte mit einer Arretiertechnik und/oder einer ABS-Bremstechnik und/oder einer Schlingerbremstechnik ausgestattet sein. Dies kann im Wege einer Erstausstattung oder auch mittels Nachrüstungen oder Umrüstungen erfolgen.

Der beanspruchte Fahrzeuganhänger kann auch weitere Komponenten, wie z.B. einen Rangierantrieb, umfassen.

In den Unteransprüchen sind weitere vorteilhafte Ausgestaltungen der Erfindung angegeben.

Der beanspruchte Arretiertechnik, insbesondere die Arretiereinrichtung und das Arretierverfahren, sowie ggf. die Schlingerbremstechnik können folgende Ausgestaltungsmerkmale umfassen, die jeweils einzeln oder in Kombination benutzt werden können.

Die Arretiereinrichtung kann ein Stützmittel zum Anbau und zur Abstützung am Fahrzeuganhänger aufweisen. Die Arretiereinrichtung kann alternativ oder zusätzlich an der ABS-Bremseinrichtung abgestützt sein.

Ein Arretierelement der Arretiereinrichtung kann ein Rastmittel, insbesondere eine Verzahnung, aufweisen. Ein Arretierelement der Arretiereinrichtung kann ein am Bremsübertragungsstrang montierbares Gegenrastmittel, insbesondere eine Verzahnung, aufweisen.

Die Arretiereinrichtung kann ein Lösemittel, insbesondere eine Feder, aufweisen, welches einem Arretiermittel der Arretiereinrichtung zugeordnet sein kann. Das Lösemittel kann dazu ausgebildet sein, einer steuerbaren Stellvorrichtung der Arretiereinrichtung entgegenzuwirken, welche ein bewegliches Arretierelement der Arretiereinrichtung beaufschlagt.

Die Arretiereinrichtung kann ein Kommunikationsmittel umfassen, welches zur Kommunikation mit der ABS-Bremseinrichtung, insbesondere einer ABS-Steuerung, ausgebildet ist.

Die Arretiereinrichtung kann ein Steuermodul für eine ABS-Steuerung umfassen.

Die Arretiereinrichtung kann eine eigene Steuereinheit umfassen.

Bei einer ABS-Bremseinrichtung kann ein ABS-Bremselement, insbesondere ein steuerbarer oder regelbarer Aktor des ABS-Bremselements, zur Anordnung und Einwirkung an einem Widerlager eines Bremszugmantels eines als Bowdenzug ausgebildeten Bremszugs ausgebildet sein.

Bei einer ABS-Bremseinrichtung kann ein steuerbarer oder regelbarer Aktor einen mit der ABS-Steuerung verbundenen Antrieb und ein am Bremszug oder am Bremsbetätiger einwirkfähiges, angetriebenes Stellmittel umfassen.

Der Aktor, insbesondere dessen Stellmittel, kann dazu ausgebildet sein, an einem gemeinsamen Widerlager oder an einem individuellen Widerlager der Bremszüge einzuwirken und dieses zu bewegen.

Die ABS-Bremseinrichtung kann einen Träger und einen Beschlag zur Befestigung an einem Fahrzeuganhänger umfassen.

Die ABS-Bremseinrichtung kann eine ABS-Sensorik aufweisen, welche Radsensoren umfassen kann.

Eine ABS-Bremseinrichtung mit einem am Fahrzeuganhänger abstützbaren gemeinsamen Träger für ein oder mehrere ABS-Bremselemente und für die Arretiereinrichtung gemäß des vierten Erfindungsaspekts kann folgende weitere Ausgestaltungen umfassen.

Der gemeinsame Träger kann als z.B. balkenartiges Basisteil ausgebildet sein und kann einen Beschlag aufweisen, der zur Befestigung des Trägers am Fahrzeuganhänger, insbesondere an einem Achskörper, vorgesehen und ausgebildet ist.

Ein ABS-Bremselement kann einen am Träger angeordneten, steuerbaren oder regelbaren Aktor aufweisen, der zur Anordnung und Einwirkung an einem zu einer Radbremse führenden Bremszug, insbesondere zur Anordnung und Einwirkung an einem Widerlager eines Bremszugmantels eines als Bowdenzug ausgestalteten Bremszugs, ausgebildet ist. Der steuerbare oder regelbare Aktor eines ABS-Bremselements kann einen am besagten Träger stationär angeordneten Antrieb und ein am Träger beweglich, insbesondere verschieblich, gelagertes Stellmittel umfassen, welches mit einem Widerlager eines Bremszugmantels eines als Bowdenzug ausgebildeten Bremszugs verbindbar oder verbunden sein kann.

Das Stellmittel kann ein mit dem Antrieb des ABS-Bremselements wirkverbundenes Treibmittel, insbesondere eine Gewindespindel, und ein damit gekoppeltes Übertragungselement, insbesondere einen Schlitten, umfassen. Das Übertragungselement kann ein Widerlager eines Bremszugmantels eines als Bowdenzug ausgestalteten Bremszugs tragen.

Die Arretiereinrichtung, insbesondere ein steuerbares Arretiermittel der Arretiereinrichtung, kann am gemeinsamen Träger in Richtung zur Auflaufvorrichtung vor einem Aktor eines ABS-Bremselements, insbesondere vor dessen Antrieb, angeordnet sein.

Der gemeinsame Träger, insbesondere dessen Basisteil, kann ein Aufnahmeelement für das steuerbare Arretiermittel und einen arretierfähigen Endbereich des Bremsübertragungsstrangs, insbesondere des Bremsübertragers, umfassen.

Die besagte ABS-Bremseinrichtung kann einen mit der Arretiereinrichtung zusammenwirkenden Bremsübertrager umfassen.

Die ABS-Bremseinrichtung kann in den verschiedenen genannten Ausgestaltungen jeweils mit einer Schlingerbremseinrichtung kombiniert sein.

ABS-Bremseinrichtung und die Schlingerbremseinrichtung, insbesondere deren ABS-Bremselemente und

Schlingerbremselemente, können einen gemeinsamen Aktor aufweisen.

Die ABS-Bremseinrichtung und die Schlingerbremseinrichtung können eine gemeinsame Steuerung aufweisen.

Die ABS-Bremseinrichtung und die Schlingerbremseinrichtung können gemeinsam zur Anordnung und Einwirkung an einem Bremsbetätiger in einer Radbremse oder an einem zu einer Radbremse führenden Bremszug ausgebildet sein. Die ABS-Bremseinrichtung und die Schlingerbremseinrichtung können insbesondere gemeinsam zur Einwirkung an einem gemeinsamen Widerlager oder an individuellen Widerlagern der Bremszüge ausgebildet sein.

Die ABS-Bremseinrichtung und die Schlingerbremseinrichtung können dazu ausgebildet sein, das gemeinsame Widerlager oder die individuellen Widerlager ausgehend jeweils von einer zum Auflaufbremsen fixierbaren Null-Stellung zum ABS-Bremsen und zum Schlingerbremsen nach entgegengesetzten Betätigungsrichtungen (a,s) zu bewegen.

Die beanspruchte Betriebsbremseinrichtung kann einen mechanischen und auflaufbeweglichen Bremsübertragungsstrang umfassen, der für ein Zusammenwirken mit einer Arretiereinrichtung, insbesondere einem Arretiermittel der Arretiereinrichtung, ausgebildet ist.

Ein Fahrzeuganhänger kann in der beanspruchten Weise ausgebildet sein.

Ein Fahrzeuganhänger kann andererseits Fahrzeugräder mit Radbremsen und eine Betriebsbremseinrichtung mit einer Auflaufbremseinrichtung und einer beim Auflaufbremsen und blockierenden Fahrzeugrädern wirkfähigen ABS-Bremseinrichtung umfassen, wobei die Auflaufbremseinrichtung einen zu den Radbremsen führenden mechanischen und auflaufbeweglichen Bremsübertragungsstrang aufweist und die ABS-Bremseinrichtung ein oder mehrere auf die Radbremsen einwirkende ABS-Bremselemente, eine ABS-Sensorik und eine ABS-Steuerung umfasst, wobei die ein oder mehreren ABS-Bremselemente bei einer Aktivierung der ABS-Bremseinrichtung die Radbremsen lösen und spannen. Der Fahrzeuganhänger weist ferner eine Arretiereinrichtung auf, die mit der ABS-Bremseinrichtung, insbesondere mit deren ABS-Steuerung, steuertechnisch verbunden ist und die ein auf den mechanischen Bremsübertragungsstrang einwirkfähiges steuerbares Arretiermittel umfasst, das am Bremsübertragungsstrang strangaufwärts von den ein oder mehreren ABS-Bremselementen angeordnet und am Fahrzeuganhänger abgestützt ist.

Die Arretiereinrichtung kann dazu ausgebildet sein, in Gespannfahrt den mechanischen Bremsübertragungsstrang und dessen Auflaufbewegung bei einer Aktivierung der ABS-Bremseinrichtung zu arretieren und bei einer Deaktivierung der ABS-Bremseinrichtung wieder freizugeben.

Die beanspruchte Arretiereinrichtung kann bei einem Fahrzeuganhänger in der vorgenannten Ausbildung oder der beanspruchten Ausbildung dazu verwendet werden, den Bremsübertragungsstrang bei einer Rückwärtsfahrt des Fahrzeuganhängers im Gespannbetrieb mit einem Zugfahrzeug zu arretieren.

Die beanspruchte Arretiereinrichtung kann bei einem Fahrzeuganhänger in der vorgenannten Ausbildung oder der beanspruchten Ausbildung dazu verwendet werden, eine eventuelle Rekuperationsbremse und eine Batterieaufladung an einem Zugfahrzeug bei Unterschreiten eines vorgegeben Verzögerungswerts zu unterstützen und dabei die anhängerseitige Auflaufbremseinrichtung und den Bremsübertragungsstrang vollständig oder teilweise zu arretieren sowie bei Überschreiten des vorgegeben Verzögerungswerts die anhängerseitige Auflaufbremseinrichtung und den Bremsübertragungsstrang zu lösen.

Die Erfindung ist in den Zeichnungen beispielhaft und schematisch dargestellt. Im Einzelnen zeigen:
- Figur 1:: ein aus Zugfahrzeug und Fahrzeuganhänger bestehendes und gekuppeltes Gespann mit einer Betriebsbremseinrichtung des Fahrzeuganhängers umfassend eine Auflaufbremseinrichtung, eine ABS-Bremseinrichtung und eine Arretiereinrichtung,
- Figur 2:: eine schematische Draufsicht einer Auflaufbremseinrichtung, ABS-Bremseinrichtung und Arretiereinrichtung,
- Figur 3:: eine Variante der Betriebsbremseinrichtung von Figur 2 mit einer zusätzlichen Schlingerbremseinrichtung,
- Figur 4:: eine Abwandlung der Betriebsbremseinrichtung von Figur 3 mit anderer Anordnung und Ausbildung von ABS-Bremseinrichtung und Schlingerbremseinrichtung,
- Figur 5, 6 und 7:: einen Fahrzeuganhänger mit einer weiteren Variante einer Betriebsbremseinrichtung mit kombinierter ABS-Bremseinrichtung und Schlingerbremseinrichtung sowie einer Arretiereinrichtung in perspektivischer Unteransicht, Seitenansicht und Draufsicht,
- Figur 8:: eine perspektivische Ansicht der Arretiereinrichtung und der kombinierten ABS- und Schlingerbremseinrichtung gemäß Figur 5 bis 7,
- Figur 9:: eine vergrößerte Detaildarstellung der Arretiereinrichtung von Figur 8 in einem abgebrochenen Längsschnitt,
- Figur 10:: einen andere perspektivische Ansicht der kombinierten ABS- und Schlingerbremseinrichtung von Figur 8,
- Figur 11:: eine schematische Draufsicht einer kombinierten ABS- und Schlingerbremseinrichtung mit Angriff an einem gemeinsamen Widerlager von Bremszugmänteln,
- Figur 12:: eine Variante zu Figur 11 mit Einzelangriffen an individuellen Widerlagern für jeweils einen einzelnen Bremszugmantel.
- Figur 13:: einen Fahrzeuganhänger mit einer zusätzlichen Variante einer Betriebsbremseinrichtung mit einer ABS-Bremseinrichtung und ggf. einer Schlingerbremseinrichtung sowie einer Arretiereinrichtung in Unteransicht,
- Figur 14:: eine perspektivische Ansicht der ABS-Bremseinrichtung von Figur 13 an einem Achskörper,
- Figur 15:: eine aufgebrochene Seitenansicht der ABS-Bremseinrichtung von Figur 13 und 14,
- Figur 16 und 17:: perspektivische Ansichten der ABS-Bremseinrichtung von Figur 13 bis 15 und
- Figur 18 bis 20:: verschiedene Schnitte der ABS-Bremseinrichtung von Figur 13 bis 15.

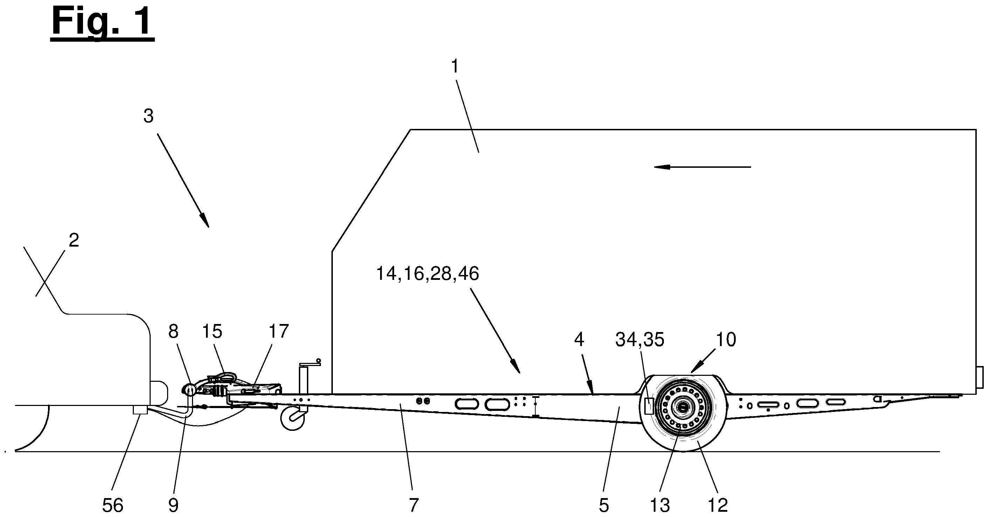

Figur 1 zeigt ein Gespann (3) aus einem motorisierten Zugfahrzeug (2) und einem angekuppelten Fahrzeuganhänger (1). Das Zugfahrzeug (2) ist z.B. ein PKW. Das Zugfahrzeug (2) weist eine Zugkupplung (9) und einen Medienverbinder, insbesondere eine elektrische Steckdose, auf. An der Zugkupplung (9) ist der Fahrzeuganhänger (1) mit seiner frontseitigen Anhängerkupplung (8) angekuppelt.

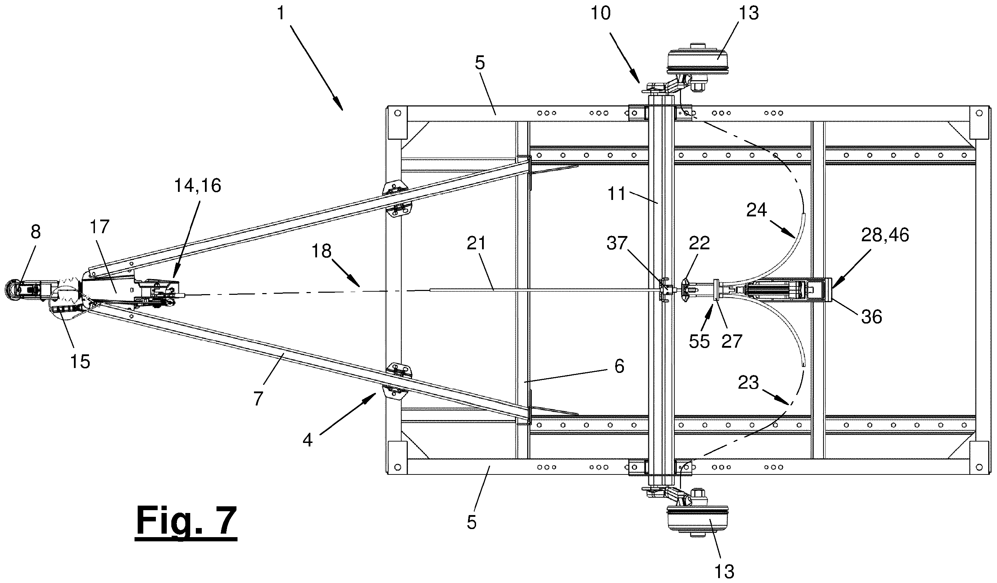

Der Fahrzeuganhänger (1) weist z.B. gemäß Figur 1, 5, 6, 7 und 13 ein Chassis (4) mit zwei oder mehr bevorzugt parallelen Längsträgern (5) und ggfs. ein oder mehreren Querträgern (6) sowie einem Aufbau auf. An der Frontseite des Chassis (4) ist eine bevorzugt starre Deichsel (7) angeordnet, die an ihrem vorderen Ende die Anhängerkupplung (8) trägt. Die Deichsel (7) kann z.B. als V-Deichsel oder als Rohrdeichsel ausgebildet sein. An der Deichsel (7) kann ein Stützrad angeordnet sein.

Am Chassis (4) ist eine Achsanordnung (10) angeordnet, die einzeln oder mehrfach vorhanden sein kann. Die Achsanordnung (10) ist an den Längsträgern (5) befestigt und weist z.B. einen quer zur Anhängerlängsache erstreckten Achskörper (11) mit daran angeordneten linken und rechten Anhängerrädern (12) auf. Die Anhängerräder (12) sind z.B. als freilaufende Räder ausgebildet und haben jeweils eine Radbremse (13), z.B. Trommelbremse. Die Anhängerräder (12) können z.B. mittels schwenkbarer und gefederter Radschwinghebel am Achskörper (11) gelagert sein. Die dadurch gebildete sogenannte Radlenkerachse kann als Längslenkerachse oder Schräglenkerachse ausgebildet sein.

Die Richtungsangaben vorn und hinten beziehen sich auf die in Figur 1 mit einem Pfeil gekennzeichnete VorwärtsFahrtrichtung des Fahrzeuganhängers (1) und des Gespanns (3).

Der Fahrzeuganhänger (1) weist eine Betriebsbremseinrichtung (14) für den Fahrbetrieb und bevorzugt auch eine Feststellbremseinrichtung (15) mit einem Handbremshebel oder dgl. auf. Die Betriebsbremseinrichtung (14) umfasst eine Auflaufbremseinrichtung (16) und eine ABS-Bremseinrichtung (28) nebst ABS-Bremsverfahren, die beim Auflaufbremsen wirken können. Die Betriebsbremseinrichtung (14) kann außerdem eine Schlingerbremseinrichtung (46) nebst Verfahren umfassen. Die ABS-Bremseinrichtung (28) kann in diesem Fall auch beim Schlingerbremsen wirksam sein.

Die Auflaufbremseinrichtung (16) umfasst eine Auflaufvorrichtung (17) am vorderen Deichselende. Die Auflaufvorrichtung (17) weist z.B. eine Auflaufstange (19) auf, die am vorderen Ende mit der Anhängerkupplung (8) verbunden ist. Die Auflaufstange (19) kann sich in Längsrichtung des Fahrzeuganhängers (1) bei dessen Auflaufen auf das Zugfahrzeug (2) gegen die Kraft einer rückstellenden Feder, insbesondere eines gefederten Stoßdämpfers, bewegen. Die Auflaufstange (19) ist am hinteren Ende über einen Umsetzer (20) mit einem Bremsübertrager (21) verbunden. Der Bremsübertrager (21) ist z.B. über einen Bremsverteiler (22) mit zwei oder mehr Bremszügen (23,24) verbunden, welche an die linken und rechten Radbremsen (13) angeschlossen sind.

Der Umsetzer (20) ist z.B. als schwenkbar gelagerter Umlenkhebel ausgebildet. Er kann die Auflaufbewegung der Auflaufvorrichtung (17) in eine Betätigungsbewegung, insbesondere Zugbewegung, des Bremsübertragers (21) umsetzen. Der Bremsverteiler (22) kann z.B. als Waagbalken ausgestaltet sein. Alternativ sind andere Ausbildungen und Anordnungen des Umsetzers (20) und des Bremsverteilers (22) möglich.

In den gezeigten Ausführungsformen einer einzelnen Achsanordnung (10) sind zwei Bremszüge (23,24) und ein Bremsverteiler (22) vorhanden. Bei einer mehrfachen Achsanordnung, z.B. einer Tandemachse, können entsprechend mehrere Bremszüge und mehrere Bremsverteiler vorhanden sein.

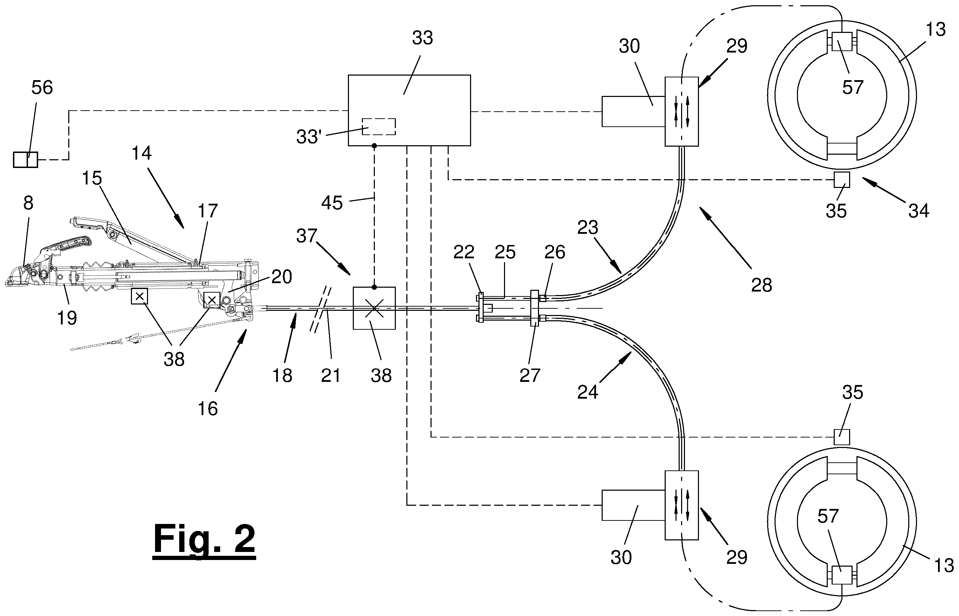

Die Bremszüge (23,24) sind z.B. jeweils als Bowdenzüge mit einem inneren Bremszugseil (25) und einem äußeren umgebenden Bremszugmantel (26) ausgebildet. Die Bremszugseile (25) sind z.B. gemäß Figur 2, 3 und 4 jeweils am einen Ende mit einem Bremsbetätiger (57) an einer Radbremse (13) und am anderen Ende mit dem Bremsverteiler (22) fest verbunden. Sie werden zum Bremsen vom Bremsübertrager (21) und dem Bremsverteiler (22) gegen die Rückstellkraft von Federn oder dgl. an den Radbremsen (13) bewegt und angezogen. Die Bremszugmäntel (26) sind jeweils mit ihren Enden an der Radbremse (13) einerseits und an einem gemeinsamen Widerlager (27) oder an individuellen Widerlagern (27) andererseits befestigt. Das oder die Widerlager (27) sind z.B. starr angeordnet und chassisfest, insbesondere an einem Achskörper (11), montiert.

Der Bremsübertrager (21) ist in den gezeigten Ausführungsbeispielen als Bremsgestänge ausgebildet. Alternativ ist eine seilförmige Ausbildung oder eine Ausgestaltung als anderes mechanisches Übertragungselement möglich. Die von der Auflaufvorrichtung (17) im Auflauffall erzeugten Bremskräfte werden z.B. als Zugkräfte an die Radbremsen (13) übertragen.

Die Auflaufvorrichtung (17), der Umlenkhebel (20), der Bremsübertrager (21), der Bremsverteiler (22) und die Bremszüge (23,24) wirken mechanisch und bilden einen mechanischen Bremsübertragungsstrang (18), der von der Auflaufvorrichtung (17) zu den Radbremsen (13) führt. Auf den Bremsübertragungsstrang (18) kann auch die Feststellbremseinrichtung (15) einwirken. Die ABS-Bremseinrichtung (28) und die Schlingerbremseinrichtung (46) können ebenfalls auf eine oder mehrere Komponenten des Bremsübertragungsstrangs (18) einwirken.

Figur 2 zeigt eine schematische Darstellung der vorgenannten Betriebsbremseinrichtung (14). Der Betriebsbremseinrichtung (14), insbesondere der ABS-Bremseinrichtung (28), ist in den gezeigten Ausführungsbeispielen eine steuerbare Arretiereinrichtung (37) zugeordnet. Die Arretiereinrichtung (37) kann bei nicht dargestellten Ausführungsbeispielen entfallen.

Die Arretiereinrichtung (37) ist dazu vorgesehen und ausgebildet, den mechanischen Bremsübertragungsstrang (18) und dessen Auflaufbewegung bei einer Aktivierung der ABS-Bremseinrichtung (28) zu arretieren und bei einer nachfolgenden Deaktivierung der ABS-Bremseinrichtung (28) wieder frei zu geben.

Die ABS-Bremseinrichtung (28) weist ein oder mehrere auf die Radbremsen (13) einwirkende ABS-Bremselemente (29) und eine ABS-Steuerung (33) auf. Die ABS-Bremseinrichtung (28) kann zudem eine eigene ABS-Sensorik (34) aufweisen.

Die ABS-Sensorik (34) ist dazu vorgesehen und ausgebildet, abnormale Bewegungszustände der Anhängerräder (12) beim Bremsen, insbesondere Auflaufbremsen, zu detektieren. Ein abnormaler Bewegungszustand kann z.B. ein Blockieren oder ein übermäßiger Schlupf von einem oder mehreren Anhängerrädern (12) sein. Die ABS-Sensorik (34) kann z.B. Radsensoren (35) umfassen, die an den Anhängerrädern (12) oder den Radbremsen (13) angeordnet sind und deren Drehbewegung oder Stillstand erfassen.

Die ein oder mehreren ABS-Bremselemente (29) und die ABS-Sensorik (34) sind mit der ABS-Steuerung (33) verbunden. Die Verbindung kann kabelgebunden oder drahtlos sein. Die ABS-Bremselemente (29) weisen jeweils einen Aktor (30) auf. Der Aktor (30) umfasst z.B. jeweils einen Antrieb (31), z.B. einen Motor, insbesondere Elektromotor, und ein hiervon beaufschlagtes Stellmittel (32), welches die zugeordnete Radbremse (13) lösen bzw. lockern und wieder spannen kann. Der Antrieb (31) kann von der ABS-Steuerung (33) gesteuert und ggf. auch in Abhängigkeit vom sensierten Bewegungsverhalten des Anhängerads (12) geregelt werden.

Bei der Detektion eines abnormalen Fahrzustands wird die ABS-Bremseinrichtung (28) aktiviert, wobei sie ein oder mehrere Radbremsen (13) löst und wieder spannt. Das Lösen und Spannen kann mehrmals hintereinander, bevorzugt in schneller Abfolge, erfolgen. Es kann bis zum Eintritt eines normalen Bewegungszustands des betreffenden Anhängerrads (12) erfolgen. Bei Eintritt des normalen Fahrzustands wird die ABS-Bremseinrichtung (28) wieder deaktiviert. Eine Deaktivierung kann auch erfolgen, wenn die Auflaufbremsung durch Beschleunigung des Zugfahrzeugs (2) und Anziehen der Auflaufvorrichtung (17) beendet wird.

Die ABS-Steuerung (33) kann mit dem Medienverbinder (56) signaltechnisch verbunden sein. Der Medienverbinder (56) kann Signale des Zugfahrzeugs (2) zum Fahrzeuganhänger (1) übertragen. Dies können z.B. Lichtsignale und andere Signale, z.B. Steuersignale, insbesondere ESP-Signale einer ESP-Einheit, des Zugfahrzeugs (2) sein. Ein übertragenes Signal kann z.B. ein Bremssignal des Zugfahrzeugs (2) sein. Bei Auftreten eines Bremssignals kann die ABS-Bremseinrichtung (28), insbesondere die ABS-Steuerung (33), in Bereitschaft versetzt werden. Durch das Beenden eines anliegenden Bremssignals kann der ABS-Steuerung (33) ein positives Beschleunigen des Zugfahrzeugs (2) und eine damit in der Regel einhergehende Beendigung des Auflaufbremsens singalisiert werden.

Die Arretiereinrichtung (37) ist mit der ABS-Bremseinrichtung (28), z.B. der ABS-Steuerung (33), steuertechnisch über ein Kommunikationsmittel (45) verbunden. Die Arretiereinrichtung (37) kann von der ABS-Steuerung (33) direkt und fremdgesteuert werden. Die Arretiereinrichtung (37) kann in einer nicht dargestellten Ausführung eine eigene Steuereinheit aufweisen, wobei die steuertechnische Verbindung als Signalverbindung ausgestaltet ist, die eine Aktivierung und Deaktivierung der ABS-Bremseinrichtung (28), insbesondere der ABS-Steuerung (33), an die eigene Steuereinheit meldet.

Das Kommunikationsmittel (45) kann leitungsgebunden sein und kann auch Anschlüssen an der ABS-Bremseinrichtung (28), insbesondere der ABS-Steuerung (33), und an der Arretiereinrichtung (37) umfassen. In einer anderen und nicht dargestellten Ausführungsform kann das Kommunikationsmittel (45) Sende- und Empfangseinheiten an der Arretiereinrichtung (37) und an der ABS-Bremseinrichtung (28), insbesondere der ABS-Steuerung (33), umfassen, welche drahtlos und bevorzugt bidirektional miteinander kommunizieren.

Im Wege einer Erstausstattung kann die ABS-Steuerung (33) bereits hardware- und softwaretechnisch dazu ausgebildet sein, die Arretiereinrichtung (37) direkt anzusteuern und im Aktivierungsfall die Arretierung des Bremsübertragungsstrangs (18) und bei Deaktivierung dessen Freigabe zu veranlassen. Sie kann alternativ die Aktivierung und Deaktivierung an eine eigene Steuereinheit der Arretiereinrichtung (37) melden, damit diese die Arretierung und Freigabe des Bremsübertragungsstrangs (18) bewirkt.

Falls die ABS-Steuerung (33) hierfür noch nicht ausgebildet ist, kann bei einer Nachrüstung oder Umrüstung ein Steuermodul (33') implementiert werden, welches softwaremäßig und hardwaremäßig ausgebildet sein kann. Das Steuermodul (33') kann die Signalisierung an die Arretiereinrichtung (37) übernehmen. Das Kommunikationsmittel (45) kann in diesem Fall mit dem Steuermodul (33') kommunizieren.

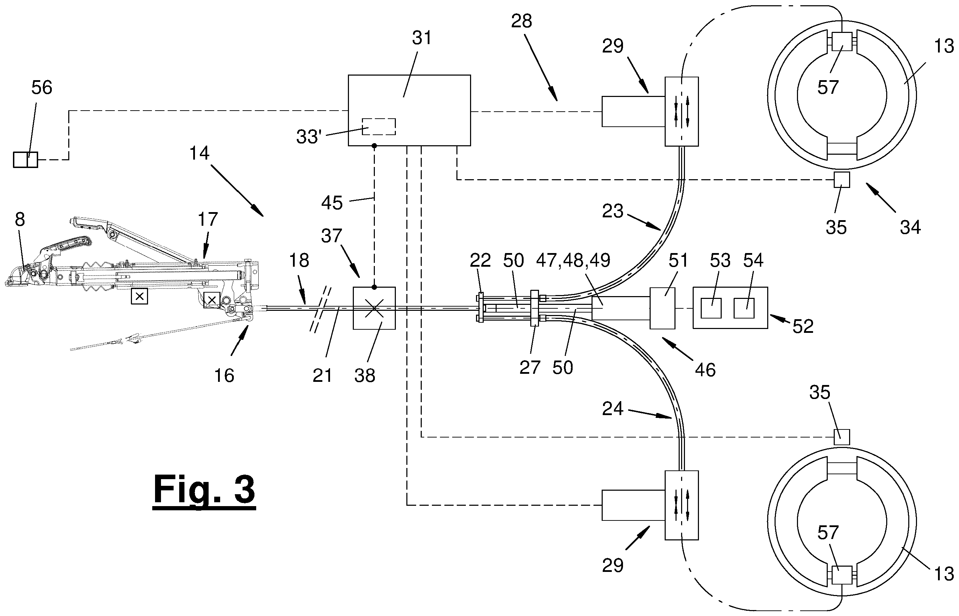

Die Arretiereinrichtung (37) weist ein oder mehrere steuerbare Arretiermittel (38) auf, die von der ABS-Steuerung (33) bzw. dem Steuermodul (33') direkt oder über eine eigene Steuereinheit der Arretiereinrichtung (37) beaufschlagt werden können. Das jeweilige Arretiermittel (38) kann am mechanischen Bremsübertragungsstrang (18) einwirken. Die ein oder mehreren Arretiermittel (38) sind am Bremsübertragungsstrang (18) strangaufwärts von den ein oder mehreren ABS-Bremselementen (29) anordenbar oder angeordnet. Figur 2 und 3 verdeutlichen z.B. Anordnungsmöglichkeiten am Bremsübertrager (21) und/oder an der Auflaufeinrichtung (17) und/oder am Umlenkhebel (20).

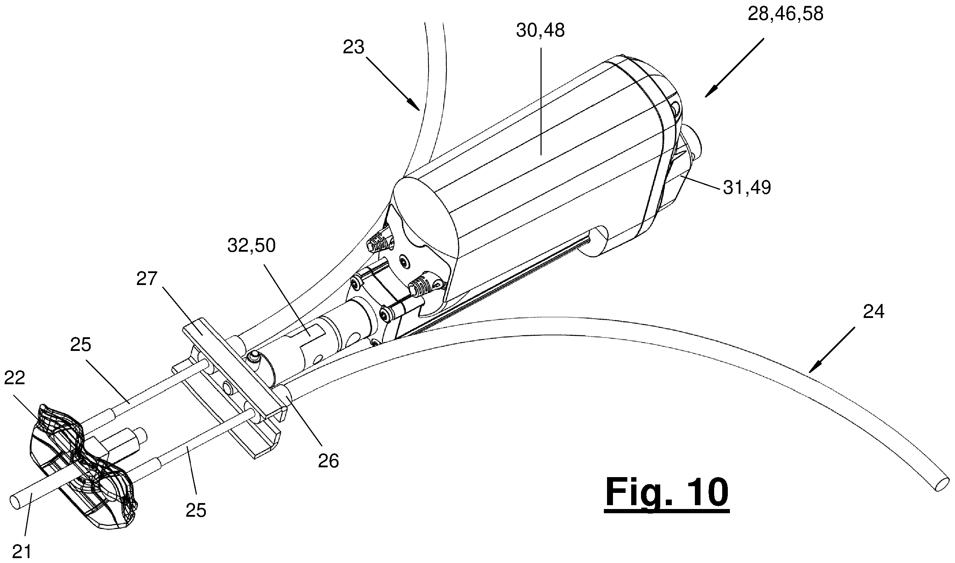

Die Arretiereinrichtung (37), insbesondere ihre ein oder mehreren Arretiermittel (38) sind am Fahrzeuganhänger (1) abstützbar oder abgestützt. Hierfür kann die Arretiereinrichtung (37) ein geeignetes Stützmittel (44) zum Anbau und zur Abstützung am Fahrzeuganhänger (1), z.B. am Chassis (4), insbesondere einem Achskörper (11), aufweisen. In den Varianten von Figur 2 bis 12 ist die Arretiereinrichtung (37), insbesondere ihr Arretiermittel (38), örtlich getrennt von dem oder den ABS-Bremselement(en) (29) angeordnet und eigenständig am Fahrzeuganhänger (1) abstützbar oder abgestützt.

Das einzeln oder mehrfach vorhandene Arretiermittel (38) weist ein steuerbares Arretierelement (39) auf, das formschlüssig und/oder kraftschlüssig am Bremsübertragungsstrang (18) einwirken kann. Das Arretierelement (39) kann beweglich in einem Gehäuse des Arretiermittels (38) gelagert sein. Das Arretiermittel (38) kann außerdem eine steuerbare Stellvorrichtung (42) umfassen, welche das Arretierelement (39) gesteuert bewegt und z.B. an den Bremsübertragungsstrang (18) zustellt und hiervon wieder entfernt. Die Stellvorrichtung (42) kann z.B. als Elektromagnet, Elektromotor, Piezoelement oder dgl. ausgebildet sein.

Das Arretierelement (39) kann ein Rastmittel (40) aufweisen. Dies kann z.B. eine Verzahnung für einen formschlüssigen Eingriff oder eine reibgünstige Oberfläche für einen kraftschlüssigen Eingriff oder eine Kombination von beiden aufweisen. Das Arretiermittel (38) kann ein am Bremsübertragungsstrang (18) vorhandenes, insbesondere montierbares, Gegenrastmittel (41) umfassen, welches mit dem rastmittel (40) zum Arretieren zusammenwirkt und ggfs. komplementär ausgebildet ist, z.B. als Gegenverzahnung und/oder als reibgünstige Gegenfläche.

Die Arretiereinrichtung (37) kann ferner ein Lösemittel (43) umfassen, welches dem Arretiermittel (38) zugeordnet ist und auf ein Arretierelement (39) einwirken kann. Das Lösemittel (43) kann z.B. als Feder ausgebildet sein. Das Lösemittel (43) kann gegen die steuerbare Stellvorrichtung (42) wirken.

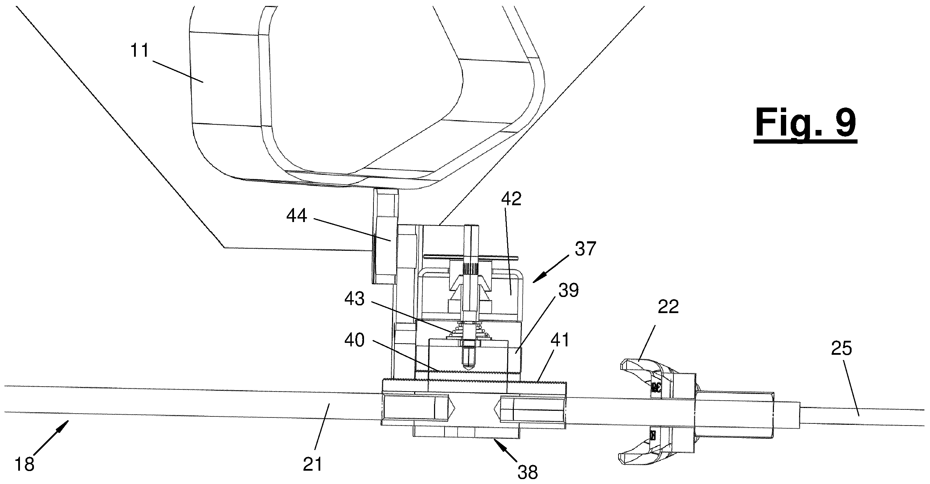

Die vorgenannte Ausbildung der Arretiereinrichtung (37) und ihres Arretiermittels (38) ist z.B. in Figur 9 beispielhaft dargestellt. Das Gegenrastmittel (41) ist hierbei z.B. an einem geteilten Bremsübertrager (21) zwischen dessen Teilen montiert. Das Arretierelement (38) befindet sich in dieser Ausführungsform am Bremsübertragungsstrang (18) strangaufwärts von einem Bremsverteiler (22).

Die Arretiereinrichtung (37) kann bei einer Anordnung an anderer Stelle des mechanischen Bremsübertragungsstrangs (18) entsprechend anders ausgebildet sein. Bei der Anordnung an der Auflaufeinrichtung (17), insbesondere der Auflaufstange (19), ist die Arretiereinrichtung (37), insbesondere das Arretiermittel (38), z.B. als Klemmeinrichtung zur Arretierung von deren Linearbewegung, ausgestaltet. Bei der Anordnung am Umsetzer (20), insbesondere Umlenkhebel, kann die Arretiereinrichtung (37), insbesondere das Arretiermittel (38), z.B. als rotatorische Klemmeinrichtung an der Hebelachse oder als Anschlag für die Hebelbewegung ausgestaltet sein.

Bei der in Figur 2 gezeigten ABS-Bremseinrichtung (28) sind die ABS-Bremselemente (29) an den einzelnen Seilzügen (23,24) angeordnet. Die gezeigten ABS-Bremselemente (29) bewirken z.B. ein Lösen und Spannen der zugeordneten Radbremse (13) durch eine Veränderung der Übertragungslänge des betreffenden Seilzugs (23,24). Die Anordnung und Ausbildung der ABS-Bremselemente (29) kann z.B. gemäß der DE 197 48 230 A1, DE 10 2008 041 687 A1 oder DE 10 2010 002 652 A1 gestaltet sein. Daneben sind andere Ausbildungen und Anordnungen von ein oder mehreren ABS-Bremselementen (29) an den Seilzügen (23,24) möglich.

In der Ausführungsform von Figur 2 weisen die Betriebsbremseinrichtung (14) und der Fahrzeuganhänger (1) nur eine ABS-Bremseinrichtung (28) und eine Arretiereninrichtung (37) auf.

Figur 3 zeigt eine erweiterte Ausführungsform, bei der die Betriebsbremseinrichtung (14) zusätzlich eine Schlingerbremseinrichtung (46) umfasst. Die ABS-Bremseinrichtung (28) und die Arretiereinrichtung (37) können in der vorbeschriebenen Weise ausgebildet und angeordnet sein.

In der Ausführung von Figur 3 greift die Schlingerbremseinrichtung (46) an den Bremszügen (23,24) an. Die Schlingerbremseinrichtung (46) umfasst z.B. ein Schlingerbremselement (47), eine Schlingersteuerung (51) und eine Schlingersensorik (52). Die letztgenannten Komponenten sind z.B. in einem gemeinsamen Gehäuse angeordnet und mittels eines Beschlags am Chassis (4), insbesondere an einem Achskörper (11) oder einem Querträger (6), ortsfest angeordnet und abgestützt. Die Schlingersensorik (52) kann einen Gierratensensor (53) und einen Querbeschleunigungssensor (54) umfassen. Der Gierratensensor (53) nimmt in der Gespannfahrt Schleuderbewegungen des Fahrzeuganhängers (1) um eine Hochachse am Kupplungspunkt der Anhängerkupplung (8) und ggf. eine überlagerte Schleuderbewegung des Zugfahrzeugs (2) auf. Der Querbeschleunigungssensor (54) erfasst die bei besagten Schleuderbewegungen auftretenden Querbeschleunigungen. Die Schlinger-Sensorik (52) kann alternativ an anderer Stelle angeordnet und in sensorischer Hinsicht anders ausgebildet sein.

Das Schlingerbremselement (47) weist einen mit der Schlingersteuerung (51) verbundenen Aktor (48) auf. Der Aktor (48) umfasst z.B. einen Antrieb (49), z.B. einen Motor, insbesondere Elektromotor, und ein hiervon beaufschlagtes Stellmittel (50). Die Schlingerbremseinrichtung (46) kann bei Auftreten von stabilitätskritischen Schleuderbewegungen des Fahrzeuganhängers (1) um die besagte Hochachse eine oder mehrere Radbremsen (13) betätigen und anziehen. Die Schlingersteuerung (51) wertet dabei die empfangenen Signale der Schlinger-Sensorik (52) in geeigneter Weise aus und vergleicht sie mit Vorgabewerten, wobei bei deren Überschreiten der Aktor (48) beaufschlagt wird und die Radbremse(n) (13) anzieht.

In der gezeigten Ausführungsform von Figur 3 ist das Stellmittel (50) als eine in Anhängerlängsrichtung ausfahrbare Koppelstange ausgebildet, die vom Antrieb (49) gesteuert oder ggf. geregelt vorgeschoben und zurückgezogen wird. Das Stellmittel (50) ist am vorderen Ende mit dem Bremsverteiler (22) verbunden. Das Stellmittel (50) kann den Bremsverteiler (22) auf dem Bremsübertrager (21) in Richtung zur Auflaufvorrichtung (17) verschieben und kann dadurch die Auflaufbremseinrichtung (16) überlagern.

Beim Schlingerbremsen können die Radbremsen (13) betätigt werden, auch wenn der Fahrzeuganhänger (1) nicht auf das Zugfahrzeug (2) aufläuft und die Auflaufbremseinrichtung (16) nicht betätigt wird. Die Intensität des Radbremseingriffs kann von der Schlingersteuerung (51) in Abhängigkeit von den sensierten Schleuderbewegungen des Fahrzeuganhängers (1) geregelt werden. Im Weiteren ist es möglich, mit der Schlinger-Sensorik (52) auch Wank- oder Rollbewegungen des Fahrzeuganhängers (1) um die Fahrzeuglängsachse und Nickbewegungen um eine Fahrzeugquerachse zu erfassen und bei Auftreten einer Fahrezuginstabilität durch Radbremseingriff zu dämpfen und zu beseitigen. Hierfür können geeignete Sensoren vorhanden sein.

Die Bremskräfte beim Schlingerbremsen können auf das aktuelle Fahrzeuggewicht abgestimmt sein. Die Schlingerbremseinrichtung (46) kann dazu mit einer Detektionseinrichtung für das aktuelle Fahrzeuggewicht gekoppelt sein.

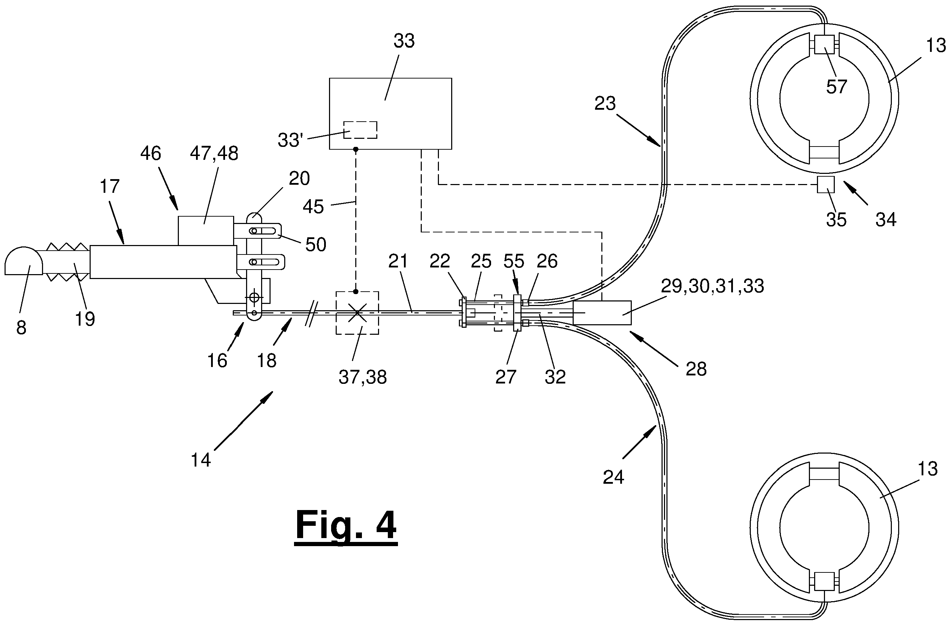

Figur 4 zeigt eine weitere Variante der Betriebsbremseinrichtung (14). Die Abwandlung betrifft die Ausbildung und Anordnung der ABS-Bremseinrichtung (28) und der ggf. vorhandenen Schlingerbremseinrichtung (46). Die Arretiereinrichtung (37) kann wie in den vorigen Ausführungsbeispielen angeordnet und ausgebildet sein.

Die Schlingerbremseinrichtung (46) ist in der Ausführung von Figur 4 an der Auflaufvorrichtung (17) angeordnet. Der Übersicht halber sind von der Schlingerbremseinrichtung (46) nur das Schlingerbremselement (47) und der Aktor (48) dargestellt. Die Schlingersteuerung (51) und die Schlingersensorik (52) sind der Übersicht halber nicht dargestellt. Der Aktor (48) weist den besagten Antrieb (49) und ein Stellmittel (50) auf, welches am Umlenkhebel (20) mittels einer Langlochführung angreift und den Umlenkhebel (20) zur Betätigung der Radbremsen (13) beim Schlingerbremsen drehen kann. Die Auflaufstange (19) ist ebenfalls über eine Langlochführung mit dem Schwenkhebel (20) verbunden, so dass beim Schlingerbremsen die Auflaufbremsvorrichtung (16) überlagert werden kann. Beim Schlingerbremsen werden die Radbremsen (13) durch ein Anziehen des Bremsübertragers (21), des Bremsverteilers (22) und der Bremszüge (23,24) betätigt. Ein Rückstellen erfolgt über Federn oder dgl. in den Radbremsen (13).

Bei der gezeigten ABS-Bremseinrichtung (28) ist in Figur 4 z.B. ein einzelnes ABS-Bremselement (29) vorhanden, welches an einem gemeinsamen Widerlager (27) der Bremszüge (23,24) angreift und das Widerlager (27) zum Lösen der Radbremsen (13) in Richtung zur Auflaufvorrichtung (17) und zur Anhängerkupplung (8) verschiebt. Die angeschlossenen Bremszugmäntel (26) werden mitgenommen und entlang der Bremszugseile (25) verschoben. Dies bewirkt ein Lösen bzw. Lockern der Radbremsen (13). Zum Spannen der Radbremsen (13) wird das Widerlager (27) vom Aktor (30) und seinem Stellmittel (32) in Gegenrichtung und in Richtung zu den Radbremsen (13) verschoben. Das Widerlager (27) ist für diese Art der Verstellung entsprechend beweglich am Chassis (4), z.B. an einem Achskörper (11) oder einem Querträger (6), gelagert. Der Aktor (30) kann in Anhängerlängsrichtung und in Strangrichtung hinter oder vor dem Widerlager (27) angeordnet sein. Der Antrieb (31) des Aktors (30) kann chassisfest am Fahrzeuganhänger (1), z.B. an einem Achskörper (11), montierbar oder montiert sein.

Der Aktor (30), insbesondere sein Stellmittel (32), kann im ABS-Bremsbetrieb zum Lösen der Radbremsen (13) von einer für den normalen Auflauf-Bremsbetrieb vorgesehenen Null-Stellung (55) in eine in Figur 4 gestrichelt dargestellte Bremslösestellung verschoben werden. Die Null-Stellung (55) kann durch einen Anschlag oder durch eine vorgegebene und ggf. blockierbare Position des Aktors (30), insbesondere des Stellmittels (32), definiert werden. Der Aktor (30), insbesondere sein Stellmittel (32), können selbsthemmend ausgebildet sein. Eine Notlöseeinrichtung kann bei Ausfall des Aktors (30) eine Rückstellung in die Null-Stellung (55) bewirken.

Bei den verschiedenen Ausführungsbeispielen ist der Fahrzeuganhänger (1) mit einer Energieversorgung, insbesondere einer Stromversorgung, ausgerüstet. Im Gespannbetrieb wird Energie, insbesondere elektrischer Strom, über den Medienverbinder (56) zum Fahrzeuganhänger (1) übertragen. Die ABS-Bremseinrichtung (28), die Arretiereinrichtung (37) und die ggf. vorhandene Schlingerbremseinrichtung (46) können mit der Energieversorgung, insbesondere elektrischen Stromversorgung, in geeigneter Weise verbunden sein. Bedarfsweise kann der Fahrzeuganhänger (1) einen eigenen Energiespeicher, z.B. eine wieder aufladbare Batterie, aufweisen. Die Energieversorgung ist der Übersicht halber nicht dargestellt.

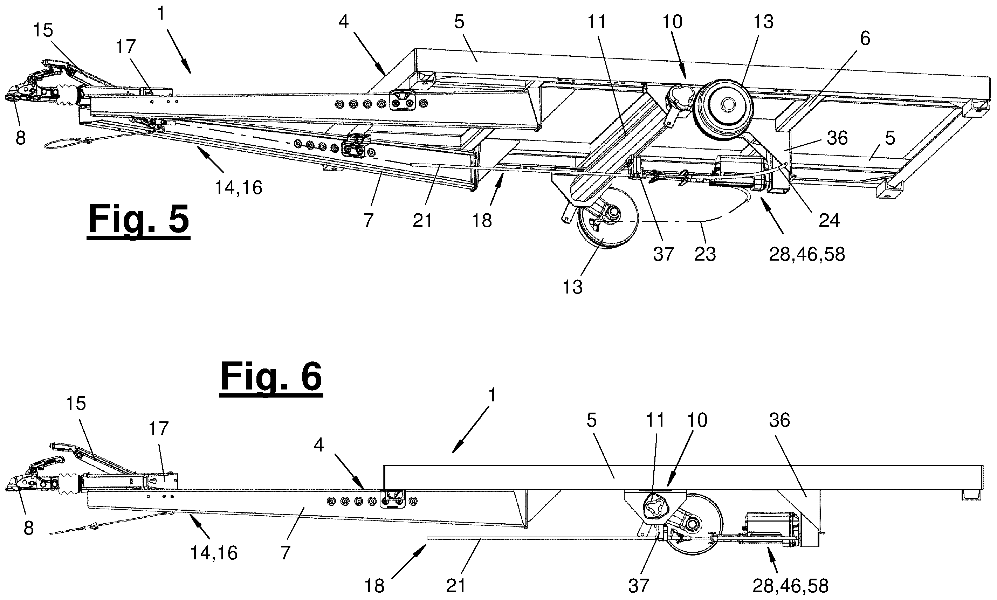

Figur 5 bis 8 und 10 bis 12 zeigen eine weitere Ausführungsvariante der ABS-Bremstechnik, insbesondere ABS-Bremseinrichtung (28), und der ggf. vorhandenen Schlingerbremstechnik, insbesondere Schlingerbremseinrichtung (46).

Die Ausbildungen der ABS-Bremstechnik in Figur 4, 5 bis 8 und 10 bis 12 haben eigenständige erfinderische Bedeutung. Sie können zusammen mit einer Arretiereinrichtung (37), aber auch ohne eine Arretiereinrichtung (37) eingesetzt werden. Sie können auch ohne eine Schlingerbremstechnik, insbesondere Schlingerbremseinrichtung (46), eingesetzt werden.

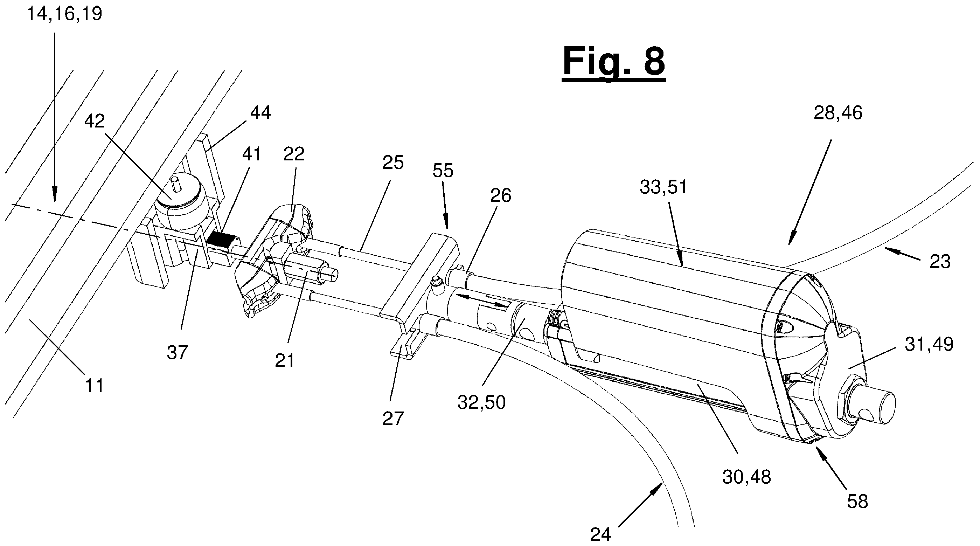

Bei den Ausführungsbeispielen von Figur 4, 5 bis 8 und 10 bis 12 kann die Arretiereinrichtung (37) in der vorbeschrieben Weise ausgebildet und angeordnet sein, z.B. gemäß Figur 9. Sie kann z.B. gemäß Figur 8 mit einem Stützmittel (44) am Fahrzeuganhänger (1), z.B. an einem Achskörper (11), montiert sein. Die Arretiereinrichtung (37) ist in diesen Ausführungsbeispielen örtlich getrennt von der ABS-Bremstechnik, insbesondere ABS-Bremseinrichtung (28), und der ggf. vorhandenen Schlingerbremstechnik, insbesondere Schlingerbremseinrichtung (46), angeordnet und montiert.

Die ABS-Bremseinrichtung (28) und die Schlingerbremseinrichtung (46) können wie in den vorbeschriebenen Ausführungen miteinander kombiniert sein, wobei sie aber z.B. in Figur 5 bis 8 und 10 bis 12 zu einer Baueinheit zusammengefasst sind. Die ABS-Bremseinrichtung (28) und die Schlingerbremseinrichtung (46) greifen beide an den Bremszügen (23,24) an. Sie können auch einen gemeinsamen Aktor (30,48) und ggf. eine gemeinsame Steuerung (33,51) umfassen. Sie können auch gemeinsam mit einer ABS-Sensorik (34) verbunden sein. Der gemeinsame Aktor (30,48) kann auch einen gemeinsamen Antrieb (31,49) und ein gemeinsames Stellmittel (32,50) umfassen, welches vom gemeinsamen Antrieb (31,49) gesteuert oder geregelt bewegt wird und an seinem freien Ende mit einem gemeinsamen Widerlager (27) oder mit individuellen Widerlagern (27) der Bremszugmänteln (26) verbunden ist.

Die gezeigte und beschriebene ABS-Bremseinrichtung (28) und deren Komponenten können auch ohne die Schlingerbremstechnik, insbesondere die Schlingerbremseinrichtung (46), eingesetzt werden. Die Steuerung (33), der Aktor (30) und das Stellmittel (32) haben dabei eine auf die ABS-Bremstechnik konzentrierte Ausbildung und Funktion.

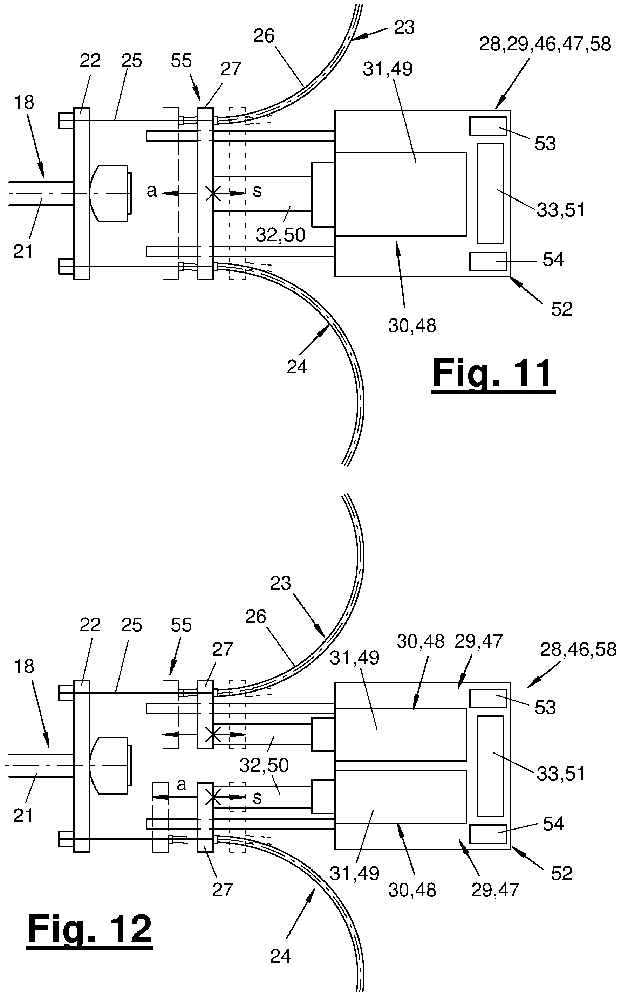

Zum ABS-Bremsen im Auflaufbremsbetrieb werden das oder die Widerlager (27) mit den angeschlossenen Bremszugmänteln (26) in Richtung zur Fahrzeugkupplung (8) und Auflaufvorrichtung (17) entlang der Bremszugseile (25) aus einer besagten Null-Stellung (55) unter Lösen der Radbremsen (13) vorgeschoben und zum Spannen der Radbremsen (13) in umgekehrter Richtung zurückgezogen. Zum Schingerbremsen werden das oder die Widerlager (27) mit den angeschlossenen Bremszugmänteln (26) aus der Null-Stellung (55) in entgegengesetzter Richtung zu den Radbremsen (13) hin verschoben und zum nachfolgenden Lösen der Radbremsen (13) wieder in die Null-Stellung (55) gebracht. Die Betätigungsrichtung (a) zum ABS-Bremsen und die Betätigungsrichtung (s) zum Schlingerbremsen sind in Figur 11 und 12 dargestellt.

Figur 11 zeigt eine Ausführungsform dieser kombinierten ABS- und Schlingerbremseinrichtung (28,46) mit einem ABS-Bremselement (29) und einem Schlingerbremselement (47). Diese können einen einzelnen gemeinsamen Aktor (30,48) und ein einzelnes gemeinsames Stellmittel (32,50) aufweisen, welches an einem gemeinsamen Widerlager (27) der Bremszüge (24,26) angreift. Die ABS-Bremsstellung und die Schlingerbremsstellung sind jeweils gestrichelt dargestellt. Die Null-Stellung (55) des Widerlagers (27) ist mit durchgezogenen Strichen gekennzeichnet.

Figur 11 zeigt auch eine vorteilhafte Vereinigung der Steuerungen (33,51) und der Schlingersensorik (52) zusammen mit dem gemeinsam Aktor (30,49) an einem gemeinsamen Träger (58), welcher z.B. gemäß Figur 5 bis 8 und 9 gehäuseartig ausgebildet und über einen Anbaubeschlag (36) an einem Querträger (6) montiert ist.

Figur 12 zeigt eine Variante von Figur 11 mit individuellen Widerlagern (27) für jeden Seilzug (23,24) und dessen Bremszugmantel (26). Diese Anordnung erlaubt ein ABS-Bremsen und Schlingerbremsen eines einzelnen Anhängerrads (12) durch individuelle Betätigung seiner Radbremse (13).

Die ABS-Bremseinrichtung (1) weist in diesem Fall zwei ABS-Bremselemente (29) auf, die jeweils auf einen der Bremszüge (23,24) einwirken. Die ABS-Bremselemente (29) umfassen jeweils einen Aktor (30) mit einem Antrieb (31), insbesondere einem elektrischen Motor, und einem Stellmittel (32). Die Aktoren (30) umfassen in diesem Fall zwei parallele Motoren (31) und zwei einzelne und parallele Stellmittel (32), die jeweils mit einem individuellen Widerlager (27) verbunden sind. Die ABS-Bremseinrichtung (1) kann eine gemeinsame Steuerung (33) für beide ABS-Bremselemente (29) aufweisen. Die ABS-Bremseinrichtung (1) kann einen gemeinsamen, z.B. gehäuseartigen, Träger (58) für beide ABS-Bremselemente (29) aufweisen, der z.B. mit dem Beschlag (36) am Fahrzeuganhänger (1), z.B. an einem Querträger (6), montiert ist.

Die ABS-Bremseinrichtung (1) kann in der vorbeschrieben Weise mit einer Schlingerbremseinrichtung (46) kombiniert sein, welche zwei Schlingerbremselemente (47) umfasst. Hierbei gibt es gemeinsamen Aktoren (30,48) mit gemeinsamen parallelen Antrieben (31,49), insbesondere elektrischen Motoren, und gemeinsamen parallelen Stellmitteln (32,50), die jeweils mit einem individuellen Widerlager (27) verbunden sind. Ansonsten können eine gemeinsame Steuerung (33,51) und eine Schlingersensorik (52) vorhanden sein, die bevorzugt gemeinsam in dem chassisfest montierten, z.B. gehäuseartigen, Träger (58) angeordnet sind.

Die in Figur 12 gezeigte Anordnung von individuellen Widerlagern (27) für die Bremszüge (23,24) ist auch bei der vorbeschriebenen Ausführungsform der Schlingerbremseinrichtung (46) von Figur 3 und der ABS-Bremseinrichtung (28) von Figur 4 mit jeweiligem Angriff an den Bremszügen (23,24) möglich. Ferner können in den vorbeschriebenen Ausführungsvarianten von Figur 3 und 4 die ABS-Bremseinrichtung (28) und die Schlingerbremseinrichtung (46) eine gemeinsame Steuerung (33,51) trotz örtlich und funktional getrennter ABS-Bremselemente (29) und Schlingerbremselemente (47) aufweisen.

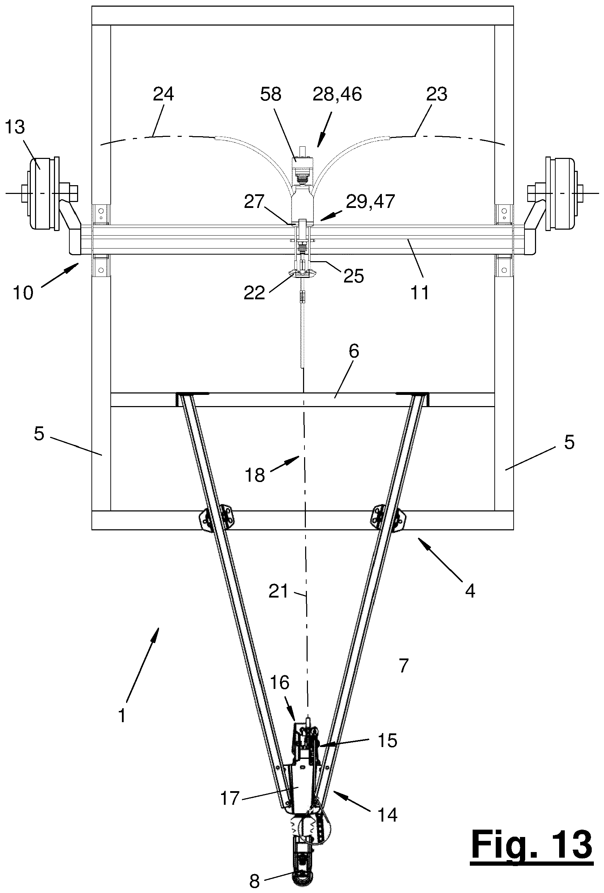

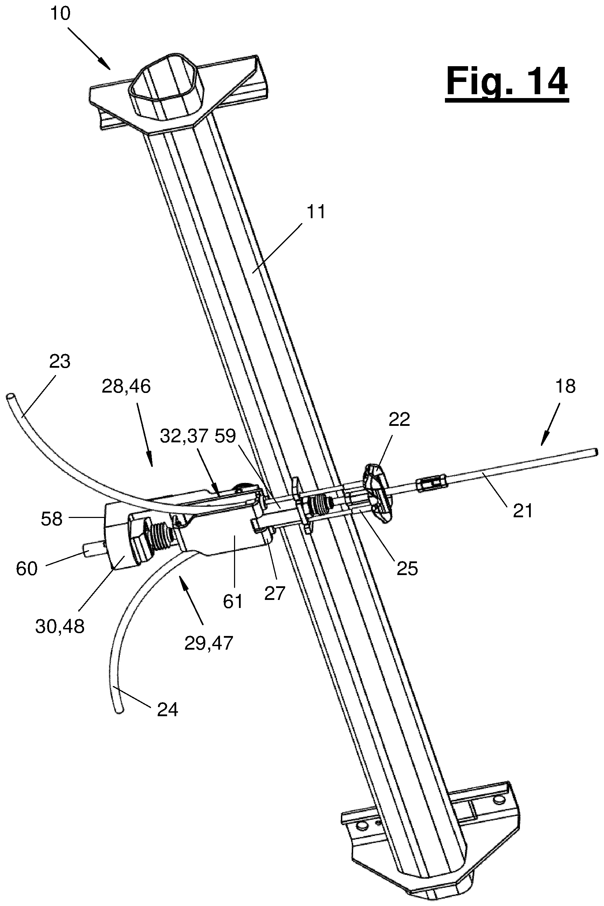

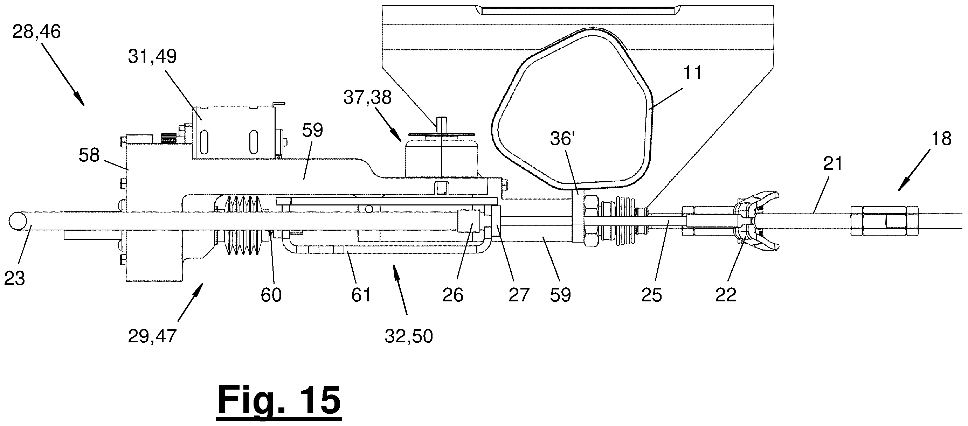

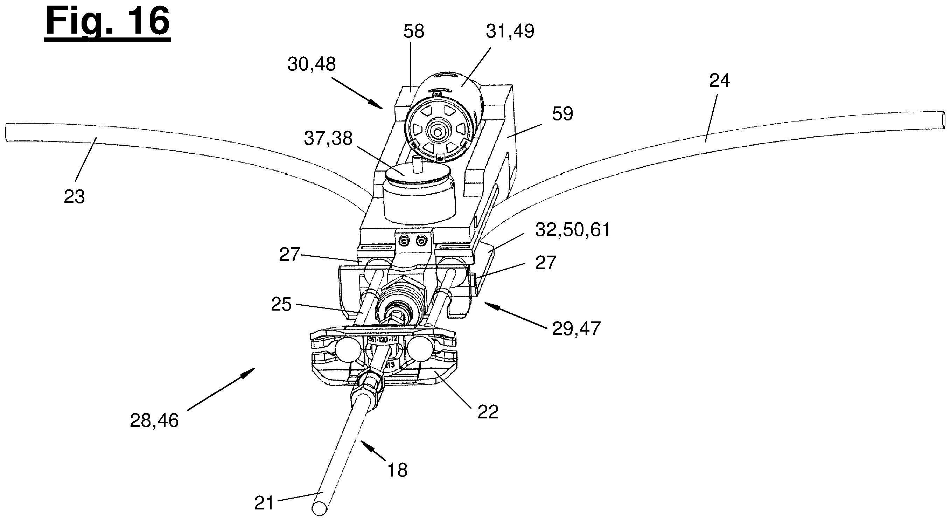

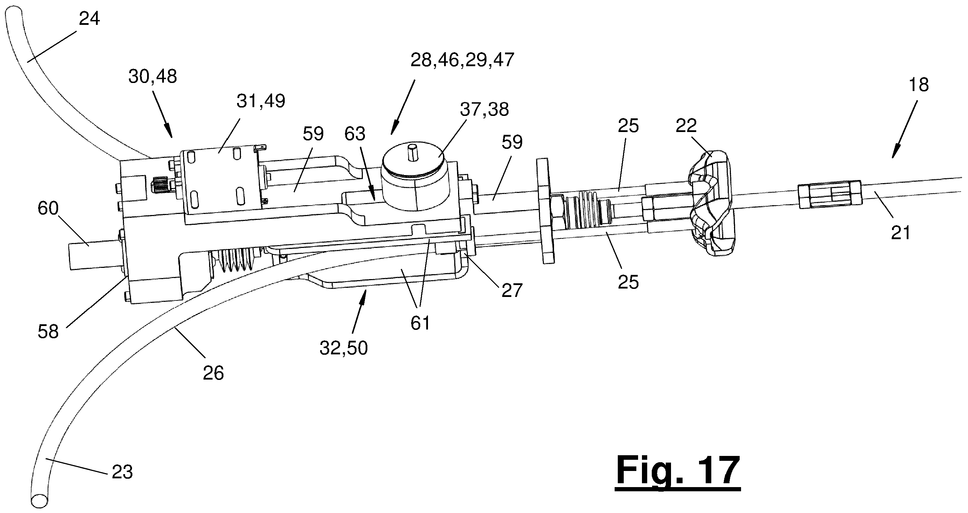

Figur 13 bis 20 zeigen eine weitere Ausführungsvariante der ABS-Bremseinrichtung (28) und der Arretiereinrichtung (37) sowie der ggf. vorhandenen Schlingerbremseinrichtung (46). Die ABS-Bremseinrichtung (28) und die Arretiereinrichtung (17), insbesondere dessen ein oder mehrere steuerbare Arretiermittel (38), können miteinander zu einer Baueinheit kombiniert sein. In diese Baueinheit kann auch eine ggf. vorhandene Schlingerbremseinrichtung (46) analog zum vorbeschriebenen Ausführungsbeispiel integriert sein.

Die besagte Baueinheit kann z.B. gemäß Figur 13, 14 und 15 am Fahrzeuganhänger (1), insbesondere an einem Achskörper (11), mittels eines Beschlags (36') chassisfest montiert sein.

Die ABS-Bremseinrichtung (28) bzw. die Baueinheit weist einen am Fahrzeuganhänger (1) abstützbaren Träger (58) auf, an dem die ein oder mehreren ABS-Bremselemente (29) und eine Arretiereinrichtung (37) mit einem steuerbaren Arretiermittel (38) angeordnet sind. Die Arretiereinrichtung (37) kann wie in den vorbeschriebenen Ausführungsbeispielen ausgebildet sein und kann auch mit der ABS-Bremseinrichtung (28), insbesondere der ABS-Steuerung (33) steuertechnisch verbunden sein.

Das steuerbare Arretiermittel (38) kann zur Einwirkung auf einen Bremsübertrager (21), insbesondere ein Bremsgestänge, des mechanischen und auflaufbeweglichen Bremsübertragungsstrangs (18) ausgebildet sein. Die ABS-Steuerung (33) und die ggf. vorhandene Schlingersteuerung (51) sind nicht dargestellt. Sie können separat angeordnet sein oder können gemeinsam in der Baueinheit und am Träger (58) angeordnet sein. Sie können auch zu einer gemeinsamen Steuerung kombiniert sein.

Der Träger (58) weist ein Basisteil (49) und einen Beschlag (36') zur besagten Befestigung an einem Achskörper (11) auf. Das Basisteil (59) ist z.B. balkenartig ausgebildet und erstreckt sich z.B. in Fahrzeuglängsrichtung bzw. in Strangrichtung.

Die ABS-Bremseinrichtung (28) weist im gezeigten Ausführungsbeispiel ein einzelnes ABS-Bremselement (29) auf, welches einen steuerbaren oder regelbaren Aktor (30) aufweist, der am Träger (58), insbesondere am Basisteil (59), angeordnet ist. Der Aktor (30) wirkt vorzugsweise auf die zu den Radbremsen (13) führenden Bremszüge (23,24), insbesondere auf deren Widerlager (27), ein.

Der Aktor (30) umfasst einen am Träger (58) stationär angeordneten Antrieb (31) und ein am Träger (58) beweglich gelagertes Stellmittel (32), welches mit den Widerlagern (27) der Bremszugmäntel (26) der als Bowdenzug ausgebildeten Bremszüge (23,24) verbindbar oder verbunden ist. Der Antrieb (31) kann z.B. am Basisteil (59), insbesondere an dessen in Strangrichtung hinteren Endbereich, fest montiert sein.

Der Antrieb (31) kann einen bevorzugt elektrischen Motor und ein nachgeschaltetes Getriebe umfassen, welches auf das Stellmittel (32) einwirkt. Das Stellmittel (32) kann am Basisteil (59) beweglich angeordnet und gelagert sein. Es kann insbesondere linear und in Strangrichtung verschieblich am Basisteil (59) gelagert sein.

Das Stellmittel (32) umfasst z.B. ein mit dem Antrieb (31), insbesondere dessen Getriebe, wirkverbundenes Treibmittel (60) und einen damit gekoppeltes Schlitten (61). Das Treibmittel (60) ist z.B. als Gewindespindeltrieb ausgebildet und setzt die drehende Antriebsbewegung des Antriebs (31) in eine lineare Vorschubbewegung des Schlittens (61) in Strangrichtung um. Der Schlitten (61) ist am Basisteil (59) linear beweglich gelagert. Das Treibelement (60) wirkt an dem in Strangrichtung rückwärtigen Ende des Schlittens (61) ein. Am in Strangrichtung vorderen Ende trägt der Schlitten (61) die z.B. zwei Widerlager (27) für die Bremszugmäntel (26).

Die Arretiereinrichtung (37), insbesondere deren steuerbares Arretiermittel (38), ist in Strangrichtung bzw. in Richtung zur Auflaufvorrichtung (17) vor dem Aktor (30), insbesondere vor dessen Antrieb (31), am Basisteil (59) angeordnet. Das Stellmittel (32), insbesondere dessen Schlitten (61) mit den Widerlagern (27), kann an dem Arretiermittel (38) vorbeibewegt werden. Der Schlitten (61) kann hierfür an der Oberseite eine Schlittenöffnung (62) aufweisen. Die Bremszugseile (25) sind beidseits am Träger (58) vorbei und ggf. durch ein dortiges kammartiges Leitelement bis zum Bremsverteiler (22) geführt und dort befestigt.

Das steuerbare Arretiermittel (38) wirkt auf einen arretierfähigen Endbereich (64) des Bremsübertragungsstrangs (18), insbesondere des Bremsübertragers (21), ein. Der Endbereich (64) ist über den Bremsverteiler (22) hinaus bis zum Träger (58) verlängert. Der Träger (58), die Arretiereinrichtung (37), insbesondere deren ein oder mehrere steuerbare Arretiermittel (38), und der Aktor (30) sind in Strangrichtung hinter dem Achskörper (11) angeordnet. Der Beschlag (36') befindet sich an dem in Strangrichtung vorderen Ende des Basisteils (59) und ist **z.B.** an der Unterseite des Achskörpers (11) befestigt.

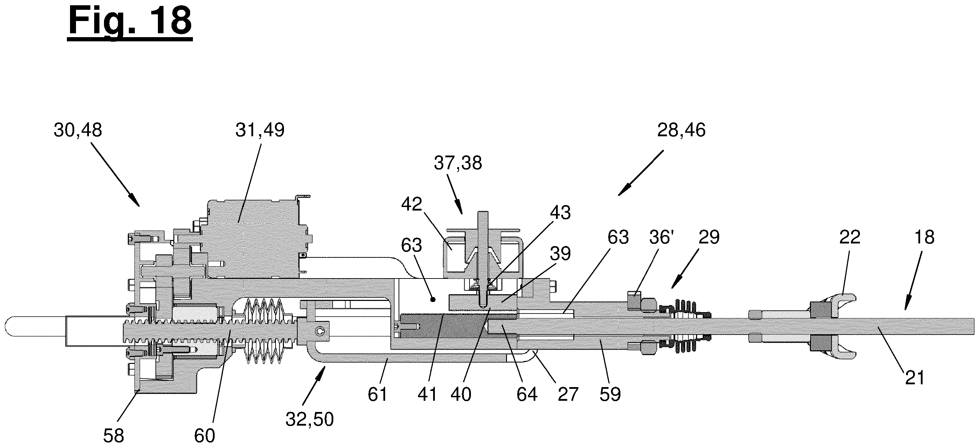

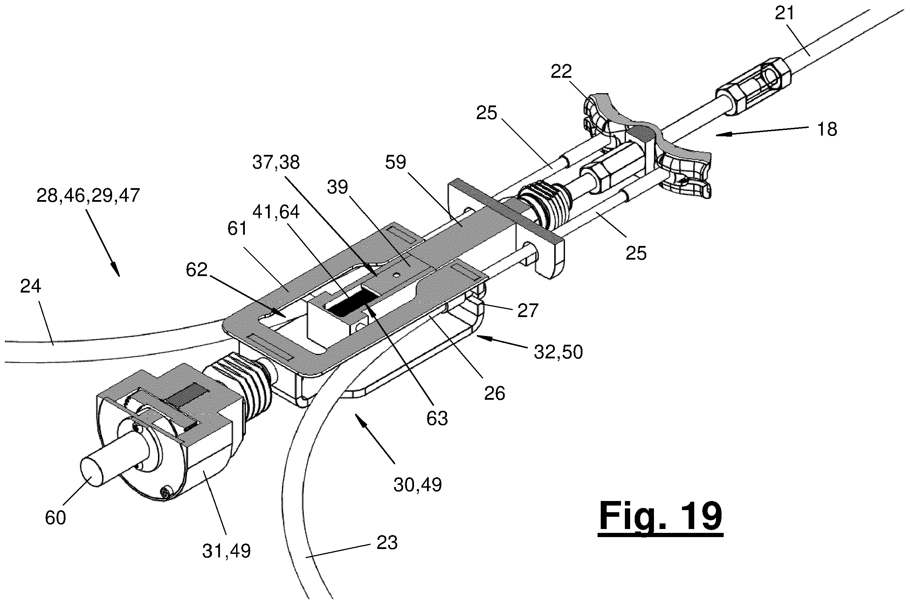

Der Träger (58), insbesondere das Basisteil (59), umfasst ein Aufnahmeelement (63) für das steuerbare Arretiermittel (38) und den arretierfähigen Endbereich (64) des Bremsübertragungsstrangs (18), insbesondere des Bremsübertragers (21). Der Endbereich (64) taucht axial in das Basisteil (59) ein. Das Aufnahmeelement (63) umfasst eine vertiefte und z.B. nach oben offene Aufnahmekammer für das darin befindliche bewegliche Arretierelement (39) und den besagten Endbereich (64). Das Aufnahmeelement (63) umfasst außerdem eine axiale Durchtrittsöffnung für den Endbereich (64). Figur 18 und 19 zeigen in geschnittenen Seitenansichten und perspektivischen Draufsichten diese Anordnung.

Das steuerbare Arretiermittel (38) umfasst eine Stellvorrichtung (42), z.B. einen steuerbaren Elektromagneten, die stationär auf dem Basisteil (59) und über der Aufnahmekammer sowie dem dortigen Arretierelement (39) angeordnet ist. Zudem kann in der vorbeschriebenen Weise ein Lösemittel (43), z.B. eine Feder, vorhanden sein.

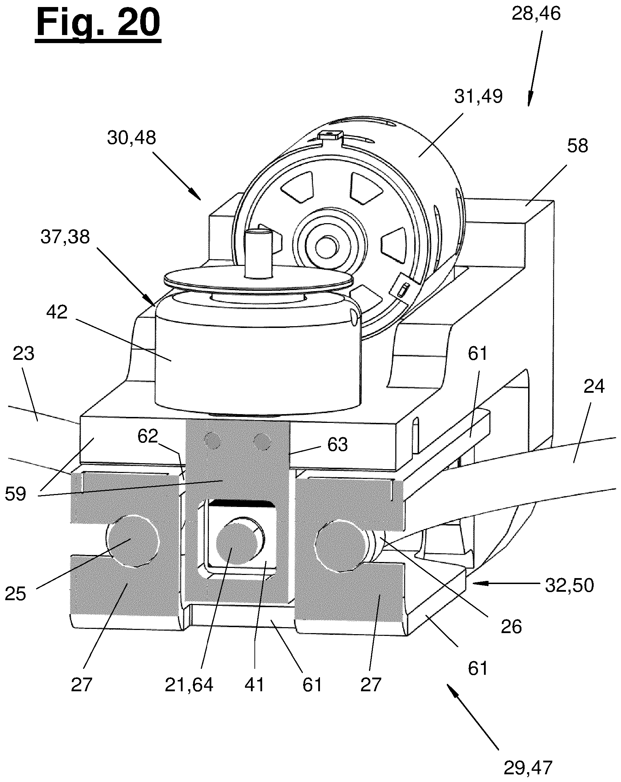

Der Schlitten (61) hat z.B. eine in Figur 20 gezeigte Gabelform, wobei der obere, in Strangrichtung weisende Gabelarm des Schlittens (61) die Schlittelöffnung (62) aufweist und damit einen beidseits seitlich eingezogenen Bereich des Basisteils (59) mit dem dortigen Aufnahmeelement (63) umfasst. Der untere Gabelarm des Schlittens (61) kann den seitlich eingezogenen Bereich des Basisteils (59) untergreifen. Seitlich von diesem Bereich des Basisteils (59) abstehende Bolzen können den oberen Gabelarm führen. Oberhalb des oberen Gabelarms ist das Basisteil wieder beidseits verbreitert und stützt die Stellvorrichtung (42) ab.

Das Arretierelement (39) kann z.B. an der Unterseite ein Rastmittel (40), insbesondere eine Verzahnung, aufweisen. Der Endbereich (64) kann ähnlich wie in Figur 9 ein Gegenrastmittel (41), z.B. eine Gegenverzahnung, an seiner Oberseite aufweisen. Der Endbereich (64) bzw. das Gegenrastmittel (41) kann im Aufnahmeelement (63) in geeigneter Weise geführt sein. Insbesondere kann am Gegenrastmittel (41) und an dessen strangabwärtigem Stirnende ein Führungsstift axial eingreifen. Am vorderen Ende des Basisteils (59) kann eine Abdichtung für den hier axial eintauchenden Endbereich (64) des Bremsübertragers (21) vorhanden sein.

Die Arretiereinrichtung (37) kann in der vorbeschriebenen Weise wirken. Beim ABS-Bremsen wird das Arretierelement (39) gegen den Endbereich (64) angedrückt und verhindert dessen axiale Bewegung. Hierdurch werden der Betätigungsstrang (18) und die Auflaufbremseinrichtung (16) blockiert. Das ABS-Bremselement (29) kann dadurch ungehindert auf die Bremszüge (23,24), insbesondere deren Widerlager (27) der Bremszugmäntel (26) einwirken. Diese Arretierwirkung tritt beim Auflaufbremsen und dem dabei überlagerten ABS-Bremsen ein.

Die ABS-Bremseinrichtung (28) kann in der Ausführungsform von Figur 13 bis 20 auch in der vorerwähnten Weise mit einer Schlingerbremseinrichtung (46) ergänzt und insbesondere zu einer Baueinheit kombiniert sein. In diesem Fall sind ein gemeinsamer Aktor (30,48) sowie ein gemeinsamer Antrieb (31,49) und ein gemeinsames Stellmittel (32,50) vorhanden. Das Zusammenwirken von ABS-Bremseinrichtung (28) und Schlingerbremseinrichtung (46) beim Schlingerbremsen kann das gleiche wie im vorbeschriebenen Ausführungsbeispiel und wie in Figur 11 gezeigt, sein. Die Arretiereinrichtung (17) kann auch beim ABS-Bremsen in Verbindung mit einem Schlingerbremsen aktiv sein und den Betätigungsstrang (18) blockieren.

In einer nicht dargestellten Ausführungsform ist auch eine Mehrfachanordnung von ABS-Bremselementen (29) und ggf. Schlingerbremselementen (47) möglich. Die Anordnung und Funktion kann die gleiche wie in Figur 12 sein. In konstruktiver Hinsicht können die ABS-Bremselemente (29) sowie die ggf. vorhandenen Schlingerbremselemente (47) jeweils einen eigenen Aktor (30,48) nebst zugehörigem Antrieb (31,49) und eigenem Stellmittel (32,50) sowie dortigem Widerlager (27) aufweisen. Bei der gezeigten Ausführungsform kann in diesem Fall der Schlitten (61) geteilt werden, wobei die Schlittenteile jeweils eigenständig am Träger (58), insbesondere am Basisteil (59) linear verschieblich geführt sind.

In Abwandlungen der gezeigten Ausführungsform kann das Stellmittel (32,50) statt des Schlittens (61) ein anderes z.B. translatorisch und/oder rotatiorisch bewegliches Übertragungselement für Stellkraft und Stellweg aufweisen. Dieses kann z.B. als Teleskopanordnung, als Lenkergetriebe oder in anderer Weise ausgebildet sein. Ferner ist es möglich, die ein oder mehreren Widerlager (27) direkt am Treibelement (60), z.B. am Spindelende, anzuordnen. Die in Figur 13 bis 20 gezeigte Baueinheit kann außerdem von einem schützenden Gehäuse zumindest bereichsweise umgeben sein.

Bei einer Kombination von ABS-Bremstechnik und Schlingerbremstechnik gemäß der vorbeschriebenen Varianten von Figur 3 bis 20 kann die ABS-Bremstechnik auch beim Schlingerbremsen und dabei evtl. auftretenden abnormalen Bewegungszuständen eines oder mehrerer Anhängerräder (12) eingesetzt werden.

Abwandlungen der gezeigten und beschriebenen Ausführungsbeispiele sind in verschiedener Weise möglich.

Die Achsanordnung (10) kann motorisch angetriebene und bevorzugt mit einer Rekuperationsbremse gekoppelte Anhängerräder (12) aufweisen.

Die Betriebsbremseinrichtung (14) kann eine Detektionseinrichtung zur Detektion einer Rekuperationsbremse am Zugfahrzeug (2) und eine Steuerung aufweisen, welche die Arretiereinrichtung (37) bei einem schwachen Auflaufen und einer sensierten schwachen Verzögerung und Unterschreiten eines vorgegebenen Verzögerungswerts betätigt, so dass der mechanische Bremsübertragungsstrang (18) und die Auflaufbremseinrichtung (16) blockiert werden und die Rekuperationsbremse des Zugfahrzeugs (2) den Fahrzeuganhänger (1) abbremst sowie eine entsprechend höhere Rekuperationswirkung und Energieausbeute hat. Falls die zugfahrzeugseitige Rekuperationsbremsung bei hohem Verzögerungsbedarf und Überschreiten eines vorgegebenen Verzögerungswerts nicht ausreicht und der Fahrzeuganhänger (1) instabil zu werden droht, kann dies mit einer Längs-und ggf. Querbeschleunigungen aufnehmende Sensorik detektiert werden, wobei die Steuerung die Arretierung aufhebt und die normale Auflaufbremsung stattfinden kann, bedarfsweise mit überlagerter ABS-Bremsung. Die besagte Steuerung und Sensorik können separat vorhanden oder z.B. Bestandteil der ABS-Bremstechnik, insbesondere der ABS-Bremseinrichtung (28), sein.

Ferner können die Einzelmerkmale der vorbeschriebenen Ausführungsvarianten im Rahmen der Ansprüche miteinander in anderer Weise kombiniert und auch vertauscht werden. Außerdem können im Rahmen der Ansprüche weitere Ausführungsvarianten mit den beschriebenen Ausgestaltungen der ABS-Bremseinrichtung (28), der Arretiereinrichtung (37) und der Schlingerbremseinrichtung (46) gebildet werden.

### BEZUGSZEICHENLISTE

- 1: Fahrzeuganhänger
- 2: Zugfahrzeug
- 3: Gespann
- 4: Chassis
- 5: Längsträger
- 6: Querträger
- 7: Deichsel
- 8: Anhängerkupplung
- 9: Zugkupplung
- 10: Achsanordnung
- 11: Achskörper
- 12: Anhängerrad
- 13: Radbremse
- 14: Betriebsbremseinrichtung
- 15: Feststellbremseinrichtung
- 16: Auflaufbremseinrichtung
- 17: Auflaufvorrichtung
- 18: Bremsübertragungsstrang
- 19: Auflaufstange
- 20: Umsetzer, Umlenkhebel
- 21: Bremsübertrager, Bremsgestänge, Bremsseil
- 22: Bremsverteiler, Waagbalken
- 23: Bremszug
- 24: Bremszug
- 25: Bremszugseil
- 26: Bremszugmantel
- 27: Widerlager
- 28: ABS-Bremseinrichtung
- 29: ABS-Bremselement
- 30: Aktor
- 31: Antrieb, Motor
- 32: Stellmittel
- 33: ABS-Steuerung
- 33': Steuermodul
- 34: ABS-Sensorik
- 35: Radsensor
- 36: Anbaubeschlag
- 36': Anbaubeschlag
- 37: Arretiereinrichtung
- 38: Arretiermittel
- 39: Arretierelement
- 40: Rastmittel, Verzahnung Zahnstange
- 41: Gegenrastmittel, Gegenverzahnung, Zahnstange
- 42: Stellvorrichtung, Magnet
- 43: Lösemittel, Feder
- 44: Stützmittel
- 45: Kommunikationsmittel
- 46: Schlingerbremseinrichtung
- 47: Schlingerbremselement
- 48: Aktor
- 49: Antrieb, Motor
- 50: Stellmittel
- 51: Schlingersteuerung
- 52: Schlinger-Sensorik
- 53: Gierratensensor
- 54: Querbeschleunigungssensor
- 55: Null-Stellung
- 56: Medienverbinder, Steckdose
- 57: Bremsbetätiger
- 58: Träger, Gehäuse, Gestell
- 59: Basisteil
- 60: Treibmittel, Treibstange
- 61: Übertragungselement, Schlitten
- 62: Schlittenöffnung
- 63: Aufnahmeelement
- 64: Endbereich

- a: Betätigungsrichtung ABS-Bremsen
- s: Betätigungsrichtung Schlingerbremsen

## Patentansprüche

1. Arretiereinrichtung für einen Fahrzeuganhänger (1) in Gespannfahrt, wobei der Fahrzeuganhänger (1) Fahrzeugräder (12) mit Radbremsen (13) und eine Betriebsbremseinrichtung (14) aufweist, wobei die Betriebsbremseinrichtung (14) eine Auflaufbremseinrichtung (16) und eine beim Auflaufbremsen und blockierenden Fahrzeugrädern (12) wirkfähige ABS-Bremseinrichtung (28) umfasst, wobei die Auflaufbremseinrichtung (16) einen zu den Radbremsen (13) führenden mechanischen und auflaufbeweglichen Bremsübertragungsstrang (18) aufweist und die ABS-Bremseinrichtung (28) ein oder mehrere auf die Radbremsen (13) einwirkende ABS-Bremselemente (29), eine ABS-Sensorik (34) und eine ABS-Steuerung (33) umfasst, wobei die ein oder mehreren ABS-Bremselemente (29) bei einer Aktivierung der ABS-Bremseinrichtung (28) die Radbremsen (13) lösen und spannen, **dadurch gekennzeichnet, dass** die Arretiereinrichtung (37) mit der ABS-Bremseinrichtung (28), insbesondere der ABS-Steuerung (33), steuertechnisch verbindbar ist und ein auf den mechanischen Bremsübertragungsstrang (18) einwirkfähiges steuerbares Arretiermittel (38) aufweist, das für eine Anordnung am Bremsübertragungsstrang (18) strangaufwärts von den ein oder mehreren ABS-Bremselementen (29) ausgebildet und am Fahrzeuganhänger (1) abstützbar ist, wobei die Arretiereinrichtung (37) dazu ausgebildet ist, den mechanischen Bremsübertragungsstrang (18) und dessen Auflaufbewegung bei einer Aktivierung der ABS-Bremseinrichtung (28) zu arretieren und bei einer Deaktivierung der ABS-Bremseinrichtung (28) wieder freizugeben.

2. Arretiereinrichtung nach Anspruch 1, wobei der Bremsübertragungsstrang (18) eine Auflaufvorrichtung (17) und einen Bremsübertrager (21) und ggf. einen nachgeschalteten Bremsverteiler (22), insbesondere einen Waagbalken, umfasst, **dadurch**
**gekennzeichnet, dass** die Arretiereinrichtung (37) zur Anordnung am Bremsübertrager (21) und/oder an der Auflaufvorrichtung (17) ausgebildet ist.

3. Arretiereinrichtung nach Anspruch 1 oder 2, **dadurch gekennzeichnet, dass** die Arretiereinrichtung (37) ein steuerbares, formschlüssig und/oder kraftschlüssig am Bremsübertragungsstrang (18) wirkendes Arretiermittel (38) aufweist, wobei bevorzugt das Arretiermittel (38) ein relativ zum Bremsübertragungsstrang (18) bewegliches Arretierelement (39) und eine steuerbare Stellvorrichtung (42), insbesondere einen Elektromagneten, umfasst.

4. ABS-Bremseinrichtung für einen Fahrzeuganhänger (1) in Gespannfahrt, wobei der Fahrzeuganhänger (1) Fahrzeugräder (12) mit Radbremsen (13) und eine Auflaufbremseinrichtung (16) mit einem zu den Radbremsen (13) führenden mechanischen und auflaufbeweglichen Bremsübertragungsstrang (18) aufweist, wobei die ABS-Bremseinrichtung (28) beim Auflaufbremsen und blockierenden Fahrzeugrädern (12) wirkfähig ist und ein oder mehrere auf die Radbremsen (13) einwirkende ABS-Bremselemente (29), eine ABS-Sensorik (34) und eine ABS-Steuerung (33) umfasst, wobei die ein oder mehreren ABS-Bremselemente (29) bei einer Aktivierung der ABS-Bremseinrichtung (28) die Radbremsen (13) lösen und spannen, **dadurch gekennzeichnet, dass** die ABS-Bremseinrichtung (28) eine Arretiereinrichtung (37) umfasst, die mit der ABS-Bremseinrichtung (28), insbesondere der ABS-Steuerung (33) steuertechnisch verbindbar oder verbunden ist und die ein auf den mechanischen Bremsübertragungsstrang (18) einwirkfähiges steuerbares Arretiermittel (38) aufweist, das für eine Anordnung am Bremsübertragungsstrang (18) strangaufwärts von den ein oder mehreren ABS-Bremselementen (29) ausgebildet und am Fahrzeuganhänger (1) abstützbar ist, wobei die Arretiereinrichtung (37) dazu ausgebildet ist, den mechanischen Bremsübertragungsstrang (18) und dessen Auflaufbewegung bei einer Aktivierung der ABS-Bremseinrichtung (28) zu arretieren und bei einer Deaktivierung der ABS-Bremseinrichtung (28) wieder freizugeben.

5. ABS-Bremseinrichtung nach Anspruch 4, **dadurch gekennzeichnet, dass** die Arretiereinrichtung (37) nach einem der Ansprüche 2 oder 3 ausgebildet ist.

6. ABS-Bremseinrichtung nach Anspruch 4 oder 5, **dadurch gekennzeichnet, dass** ein ABS-Bremselement (29) einen steuerbaren oder regelbaren Aktor (30) aufweist, der zur Anordnung und Einwirkung an einem zu einer Radbremse (13) führenden Bremszug (23,24) oder an einem Bremsbetätiger (57) in oder an einer Radbremse (13) ausgebildet ist.

7. ABS-Bremseinrichtung nach einem der Ansprüche 4 bis 6, **dadurch gekennzeichnet, dass** die ABS-Bremseinrichtung (28) einen am Fahrzeuganhänger (1) abstützbaren Träger (58) aufweist, an dem die ein oder mehreren ABS-Bremselemente (29) und eine Arretiereinrichtung (37) mit einem steuerbaren Arretiermittel (38) angeordnet sind, welches zur Einwirkung auf einen Bremsübertrager (21), insbesondere ein Bremsgestänge, des mechanischen und auflaufbeweglichen Bremsübertragungsstrangs (18) ausgebildet ist, wobei die Arretiereinrichtung (37) mit der ABS-Bremseinrichtung (28), insbesondere der ABS-Steuerung (33), steuertechnisch verbunden ist.

8. ABS-Bremseinrichtung nach einem der Ansprüche 4 bis 7, **dadurch gekennzeichnet, dass** die ABS-Bremseinrichtung (28) mit einer Schlingerbremseinrichtung (46) kombiniert ist.

9. ABS-Bremseinrichtung nach Anspruch 8, **dadurch gekennzeichnet, dass** die Schlingerbremseinrichtung (46) ein oder mehrere Schlingerbremselemente (47), eine Schlingersteuerung (51) und eine Schlinger-Sensorik (52) aufweist, welche bevorzugt einen Gierratensensor (53) und einen Querbeschleunigungssensor (54) umfasst, wobei bevorzugt die ein oder mehreren Schlingerbremselemente (47) jeweils einen Aktor (48) mit einem bevorzugt steuerbaren Antrieb (49) und einem am Bremsübertragungsstrang (18) einwirkenden Stellmittel (50) aufweisen.

10. ABS-Bremseinrichtung nach Anspruch 9, **dadurch gekennzeichnet, dass** die ABS-Bremseinrichtung (28) und die Schlingerbremseinrichtung (46) einen gemeinsamen Aktor (30,48) und bevorzugt eine gemeinsame Steuerung (33,51) aufweisen.

11. ABS-Bremseinrichtung nach einem der Ansprüche 8 bis 10, **dadurch gekennzeichnet, dass** die ABS-Bremseinrichtung (28) und die Schlingerbremseinrichtung (46) gemeinsam zur Anordnung und Einwirkung an einem Bremsbetätiger (57) in einer Radbremse (13) oder an einem zu einer Radbremse (13) führenden Bremszug (23,24), insbesondere gemeinsam zur Einwirkung an einem gemeinsamen Widerlager (27) oder an individuellen Widerlagern der Bremszüge (23,24), ausgebildet sind, wobei bevorzugt die ABS-Bremseinrichtung (28) und die Schlingerbremseinrichtung (46) dazu ausgebildet sind, das gemeinsame Widerlager (27) oder die individuellen Widerlager (27) ausgehend jeweils von einer zum Auflaufbremsen fixierbaren Null-Stellung (55) zum ABS-Bremsen und zum Schlingerbremsen nach entgegengesetzten Betätigungsrichtungen (a,s) zu bewegen.

12. Arretierverfahren für einen Fahrzeuganhänger (1) in Gespannfahrt, wobei der Fahrzeuganhänger (1) Fahrzeugräder (12) mit Radbremsen (13) und eine Betriebsbremseinrichtung (14) aufweist, wobei die Betriebsbremseinrichtung (14) eine Auflaufbremseinrichtung (16) und eine ABS-Bremseinrichtung (28) umfasst, die beim Auflaufbremsen und blockierenden Fahrzeugrädern (12) eine ABS-Bremsung durchführt, wobei die Auflaufbremseinrichtung (16) einen zu den Radbremsen (13) führenden mechanischen und auflaufbeweglichen Bremsübertragungsstrang (18) aufweist und die ABS-Bremseinrichtung (28) ein oder mehrere auf die Radbremsen (13) einwirkende ABS-Bremselemente (29), eine ABS-Sensorik (34) und eine ABS-Steuerung (33) umfasst, wobei die ein oder mehreren ABS-Bremselemente (29) bei einer Aktivierung der ABS-Bremseinrichtung (28) und beim ABS-Bremsen die Radbremsen (13) lösen und spannen, **dadurch gekennzeichnet, dass** der Bremsübertragungsstrang (18) und dessen Auflaufbewegung von einer Arretiereinrichtung (37) beim Auflaufbremsen und einem dabei durchgeführten ABS-Bremsen bei aktivierter ABS-Bremseinrichtung (28) arretiert werden und bei Beendigung der ABS-Bremsung und einer Deaktivierung der ABS-Bremseinrichtung (28) wieder freigeben werden.

13. Verfahren zum ABS-Bremsen eines Fahrzeuganhänger (1) in Gespannfahrt, wobei der Fahrzeuganhänger (1) Fahrzeugräder (12) mit Radbremsen (13) und eine Auflaufbremseinrichtung (16) mit einem zu den Radbremsen (13) führenden mechanischen und auflaufbeweglichen Bremsübertragungsstrang (18) aufweist, wobei die ABS-Bremseinrichtung (28) beim Auflaufbremsen und blockierenden Fahrzeugrädern (12) wirkt und ein oder mehrere auf die Radbremsen (13) einwirkende ABS-Bremselemente (29), eine ABS-Sensorik (34) und eine ABS-Steuerung (33) umfasst, wobei die ein oder mehreren ABS-Bremselemente (29) bei einer Aktivierung der ABS-Bremseinrichtung (28) die Radbremsen (13) lösen und spannen, **dadurch gekennzeichnet, dass** beim ABS-Bremsen mittels einer mit der ABS-Bremseinrichtung (28), insbesondere der ABS-Steuerung (33), steuertechnisch verbundenen Arretiereinrichtung (37) der mechanische Bremsübertragungsstrang (18) und dessen Auflaufbewegung bei einer Aktivierung der ABS-Bremseinrichtung (28) arretiert werden und bei einer Deaktivierung der ABS-Bremseinrichtung (28) wieder freigegeben werden.

14. Betriebsbremseinrichtung für einen Fahrzeuganhänger aufweisend Fahrzeugräder (12) mit Radbremsen (13), wobei die Betriebsbremseinrichtung (14) eine Auflaufbremseinrichtung (16) und eine beim Auflaufbremsen und blockierenden Fahrzeugrädern (12) wirkfähige ABS-Bremseinrichtung (28) umfasst, wobei die Auflaufbremseinrichtung (16) einen zu den Radbremsen (13) führenden mechanischen und auflaufbeweglichen Bremsübertragungsstrang (18) aufweist und die ABS-Bremseinrichtung (28) ein oder mehrere auf die Radbremsen (13) einwirkende ABS-Bremselemente (29), eine ABS-Sensorik (34) und eine ABS-Steuerung (33) umfasst, wobei die ein oder mehreren ABS-Bremselemente (29) bei einer Aktivierung der ABS-Bremseinrichtung (28) die Radbremsen (13) lösen und spannen, **dadurch gekennzeichnet, dass** die ABS-Bremseinrichtung (28) nach einem der Ansprüche 4 bis 11 ausgebildet ist.

15. Fahrzeuganhänger aufweisend Fahrzeugräder (12) mit Radbremsen (13) und eine Betriebsbremseinrichtung (14) mit einer Auflaufbremseinrichtung (16) und einer beim Auflaufbremsen und blockierenden Fahrzeugrädern (12) wirkfähigen ABS-Bremseinrichtung (28), wobei die Auflaufbremseinrichtung (16) einen zu den Radbremsen (13) führenden mechanischen und auflaufbeweglichen Bremsübertragungsstrang (18) aufweist und die ABS-Bremseinrichtung (28) ein oder mehrere auf die Radbremsen (13) einwirkende ABS-Bremselemente (29), eine ABS-Sensorik (34) und eine ABS-Steuerung (33) umfasst, wobei die ein oder mehreren ABS-Bremselemente (29) bei einer Aktivierung der ABS-Bremseinrichtung (28) die Radbremsen (13) lösen und spannen, **dadurch gekennzeichnet, dass** die ABS-Bremseinrichtung (28) nach einem der Ansprüche 4 bis 11 ausgebildet ist.

## Claims

1. Locking device for a vehicle trailer (1) in towing travel, wherein the vehicle trailer (1) has vehicle wheels (12) with wheel brakes (13) and a service braking device (14), wherein the service braking device (14) comprises an overrun braking device (16) and an ABS braking device (28) which is operative in the event of the overrun braking and locking vehicle wheels (12), wherein the overrun braking device (16) has a mechanical and overrun-movable braking transmission train (18) leading to the wheel brakes (13), and the ABS braking device (28) comprises one or more ABS braking elements (29) acting on the wheel brakes (13), an ABS sensor arrangement (34) and an ABS controller (33), wherein, when the ABS braking device (28) is activated, the one or more ABS braking elements (29) release and tension the wheel brakes (13), **characterized in that** the locking device (37) is connectable in terms of control to the ABS braking device (28), in particular to the ABS controller (33), and has a controllable locking means (38) which is capable of acting on the mechanical braking transmission train (18), is designed for arranging on the braking transmission train (18) upstream on the train from the one or more ABS braking elements (29) and can be supported on the vehicle trailer (1), wherein the locking device (37) is designed to lock the mechanical braking transmission train (18) and the overrun movement thereof when the ABS braking device (28) is activated and to release same again when the ABS braking device (28) is deactivated.

2. Locking device according to Claim 1, wherein the braking transmission train (18) comprises an overrun apparatus (17) and a braking transmitter (21) and optionally a braking distributor (22) connected downstream, in particular a balance beam, **characterized in that** the locking device (37) is designed for arranging on the braking transmitter (21) and/or on the overrun apparatus (17).

3. Locking device according to Claim 1 or 2, **characterized in that** the locking device (37) has a controllable locking means (38) acting in a form-fitting and/or force-fitting manner on the braking transmission train (18), wherein preferably the locking means (38) comprises a locking element (39) which is movable relative to the braking transmission train (18) and a controllable actuation apparatus (42), in particular an electromagnet.

4. ABS braking device for a vehicle trailer (1) in towing travel, wherein the vehicle trailer (1) has vehicle wheels (12) with wheel brakes (13) and an overrun braking device (16) with a mechanical and overrun-movable braking transmission train (18) leading to the wheel brakes (13), wherein the ABS braking device (28) is operative in the event of the overrun braking and locking vehicle wheels (12) and comprises one or more ABS braking elements (29) acting on the wheel brakes (13), an ABS sensor arrangement (34) and an ABS controller (33), wherein, when the ABS braking device (28) is activated, the one or more ABS braking elements (29) release and tension the wheel brakes (13), **characterized in that** the ABS braking device (28) comprises a locking device (37) which is connectable or connected in terms of control to the ABS braking device (28), in particular to the ABS controller (33), and which has a controllable locking means (38) which is capable of acting on the mechanical braking transmission train (18), is designed for arranging on the braking transmission train (18) upstream on the train from the one or more ABS braking elements (29) and can be supported on the vehicle trailer (1), wherein the locking device (37) is designed to lock the mechanical braking transmission train (18) and the overrun movement thereof when the ABS braking device (28) is activated and to release same again when the ABS braking device (28) is deactivated.

5. ABS braking device according to Claim 4, **characterized in that** the locking device (37) is designed according to either of Claims 2 and 3.

6. ABS braking device according to Claim 4 or 5, **characterized in that** an ABS braking element (29) has an actuator (30) which can be controlled or regulated and is designed for arranging and acting on a brake cable pull (23, 24) leading to a wheel brake (13) or on a braking actuator (57) in or on a wheel brake (13).

7. ABS braking device according to one of Claims 4 to 6, **characterized in that** the ABS braking device (28) has a carrier (58) which can be supported on the vehicle trailer (1) and to which the one or more ABS braking elements (29) and a locking device (37) with a controllable locking means (38) are arranged, the locking means being designed to act on a braking transmitter (21), in particular a braking linkage, of the mechanical and overrun-movable braking transmission train (18), wherein the locking device (37) is connected in terms of control to the ABS braking device (28), in particular to the ABS controller (33).

8. ABS braking device according to one of Claims 4 to 7, **characterized in that** the ABS braking device (28) is combined with an anti-sway braking device (46).

9. ABS braking device according to Claim 8, **characterized in that** the anti-sway braking device (46) has one or more anti-sway braking elements (47), an anti-sway controller (51) and an anti-sway sensor arrangement (52) which preferably comprises a yaw rate sensor (53) and a transverse acceleration sensor (54), wherein preferably the one or more anti-sway braking elements (47) each have an actuator (48) with a preferably controllable drive (49) and an actuation means (50) acting on the braking transmission train (18).

10. ABS braking device according to Claim 9, **characterized in that** the ABS braking device (28) and the anti-sway braking device (46) have a common actuator (30, 48) and preferably a common controller (33, 51).

11. ABS braking device according to one of Claims 8 to 10, **characterized in that** the ABS braking device (28) and the anti-sway braking device (46) are designed jointly for arranging and acting on a brake actuator (57) in a wheel brake (13) or on a brake cable pull (23, 24) leading to a wheel brake (13), in particular jointly for acting on a common abutment (27) or on individual abutments of the brake cable pulls (23, 24), wherein preferably the ABS braking device (28) and the anti-sway braking device (46) are designed to move the common abutment (27) or the individual abutments (27) in opposite actuating directions (a, s) starting in each case from a zero position (55), which is fixable with respect to the overrun braking, for the ABS braking and for the anti-sway braking.

12. Locking method for a vehicle trailer (1) in towing travel, wherein the vehicle trailer (1) has vehicle wheels (12) with wheel brakes (13) and a service braking device (14), wherein the service braking device (14) comprises an overrun braking device (16) and an ABS braking device (28) which carries out ABS braking in the event of the overrun braking and locking vehicle wheels (12), wherein the overrun braking device (16) has a mechanical and overrun-movable braking transmission train (18) leading to the wheel brakes (13), and the ABS braking device (28) comprises one or more ABS braking elements (29) acting on the wheel brakes (13), an ABS sensor arrangement (34) and an ABS controller (33), wherein, when the ABS braking device (28) is activated and in the event of the ABS braking, the one or more ABS braking elements (29) release and tension the wheel brakes (13), **characterized in that**, when the ABS braking device (28) is activated, the braking transmission train (18) and its overrun movement are locked by a locking device (37) in the event of the overrun braking and ABS braking carried out in the process and release same again when the ABS braking is ended and the ABS braking device (28) is deactivated.

13. Method for the ABS braking of a vehicle trailer (1) in towing travel, wherein the vehicle trailer (1) has vehicle wheels (12) with wheel brakes (13) and an overrun braking device (16) with a mechanical and overrun-movable braking transmission train (18) leading to the wheel brakes (13), wherein the ABS braking device (28) is operative in the event of the overrun braking and locking vehicle wheels (12) and comprises one or more ABS braking elements (29) acting on the wheel brakes (13), an ABS sensor arrangement (34) and an ABS controller (33), wherein, when the ABS braking device (28) is activated, the one or more ABS braking elements (29) release and tension the wheel brakes (13), **characterized in that**, in the event of the ABS braking, when the ABS braking device (28) is activated, the mechanical braking transmission train (18) and its overrun movement are locked by means of a locking device (37), which is connected in terms of control to the ABS braking device (28), in particular to the ABS controller (33), and are released again when the ABS braking device (28) is deactivated.

14. Service braking device for a vehicle trailer having vehicle wheels (12) with wheel brakes (13), wherein the service braking device (14) comprises an overrun braking device (16) and an ABS braking device (28) which is operative in the event of the overrun braking and locking vehicle wheels (12), wherein the overrun braking device (16) has a mechanical and overrun-movable braking transmission train (18) leading to the wheel brakes (13), and the ABS braking device (28) comprises one or more ABS braking elements (29) acting on the wheel brakes (13), an ABS sensor arrangement (34) and an ABS controller (33), wherein, when the ABS braking device (28) is activated, the one or more ABS braking elements (29) release and tension the wheel brakes (13), **characterized in that** the ABS braking device (28) is designed according to one of Claims 4 to 11.

15. Vehicle trailer having vehicle wheels (12) with wheel brakes (13) and a service braking device (14) with an overrun braking device (16) and an ABS braking device (28) which is operative in the event of the overrun braking and locking vehicle wheels (12), wherein the overrun braking device (16) has a mechanical and overrun-movable braking transmission train (18) leading to the wheel brakes (13), and the ABS braking device (28) comprises one or more ABS braking elements (29) acting on the wheel brakes (13), an ABS sensor arrangement (34) and an ABS controller (33), wherein, when the ABS braking device (28) is activated, the one or more ABS braking elements (29) release and tension the wheel brakes (13), **characterized in that** the ABS braking device (28) is designed according to one of Claims 4 to 11.

## Revendications

1. Dispositif d'arrêt pour une remorque de véhicule (1) en situation d'attelage, la remorque de véhicule (1) présentant des roues de véhicule (12) avec des freins de roue (13) et un dispositif (14) de freinage de service, le dispositif (14) de freinage de service comprenant un dispositif (16) de freinage par inertie et un dispositif (28) de freinage ABS apte à agir en cas de freinage par inertie et de blocage des roues de véhicule (12), le dispositif (16) de freinage par inertie présentant une chaîne (18) de transmission de freinage mécanique et mobile par inertie menant aux freins de roue (13), et le dispositif (28) de freinage ABS comprenant un ou plusieurs éléments (29) de freinage ABS agissant sur les freins de roue (13), un système (34) de détection ABS et une commande d'ABS (33), les un ou plusieurs éléments (29) de freinage ABS relâchant et serrant les freins de roue (13) lors d'une activation du dispositif (28) de freinage ABS, **caractérisé en ce que** le dispositif d'arrêt (37) est apte à être relié au dispositif (28) de freinage ABS, en particulier à la commande d'ABS (33), par une technique de commande, et présente un moyen d'arrêt (38) apte à être commandé et agissant sur la chaîne (18) de transmission de freinage mécanique, qui est conçu pour être agencé sur la chaîne (18) de transmission de freinage en amont desdits un ou plusieurs éléments (29) de freinage ABS et qui est apte à être supporté sur la remorque de véhicule (1), le dispositif d'arrêt (37) étant conçu de façon à arrêter la chaîne (18) de transmission de freinage mécanique et son mouvement d'inertie lors d'une activation du dispositif (28) de freinage ABS et pour la relâcher à nouveau lors d'une désactivation du dispositif (28) de freinage ABS.

2. Dispositif d'arrêt selon la revendication 1, dans lequel la chaîne (18) de transmission de freinage comprend un dispositif à inertie (17) et un transmetteur de freinage (21) et, éventuellement, un distributeur de freinage (22) monté en aval, en particulier une poutre horizontale, **caractérisé en ce que** le dispositif d'arrêt (37) est conçu pour être agencé sur le transmetteur de freinage (21) et/ou sur le dispositif à inertie (17).

3. Dispositif d'arrêt selon la revendication 1 ou la revendication 2, **caractérisé en ce que** le dispositif d'arrêt (37) présente un moyen d'arrêt (38) commandable, agissant par complémentarité de forme et/ou par engagement par force sur la chaîne (18) de transmission de freinage, le moyen d'arrêt (38) comprenant de préférence un élément d'arrêt (39) mobile par rapport à la chaîne (18) de transmission de freinage et un dispositif de réglage (42) commandable, en particulier un électroaimant.

4. Dispositif de freinage ABS pour une remorque de véhicule (1) en situation d'attelage, la remorque de véhicule (1) présentant des roues de véhicule (12) avec des freins de roue (13) et un dispositif (16) de freinage par inertie avec une chaîne (18) de transmission de freinage mécanique et mobile par inertie, menant aux freins de roue (13), le dispositif (28) de freinage ABS étant actif lors du freinage par inertie et du blocage des roues du véhicule (12) et comprenant un ou plusieurs éléments (29) de freinage ABS agissant sur les freins de roue (13), un système (34) de détection ABS et une commande d'ABS (33), lesdits un ou plusieurs éléments (29) de freinage ABS relâchant et serrant les freins de roue (13) lors d'une activation du dispositif (28) de freinage ABS, **caractérisé en ce que** le dispositif (28) de freinage ABS comprend un dispositif d'arrêt (37) qui est apte à être relié ou est relié par une technique de commande au dispositif (28) de freinage ABS, en particulier à la commande d'ABS (33), et qui présente un moyen d'arrêt (38) apte à être commandé et agissant sur la chaîne (18) de transmission de freinage mécanique, qui est conçu pour être agencé sur la chaîne (18) de transmission de freinage en amont desdits un ou plusieurs éléments (29) de freinage ABS et qui est apte à être supporté par la remorque de véhicule (1), le dispositif d'arrêt (37) étant conçu pour arrêter la chaîne (18) de transmission de freinage mécanique et son mouvement d'inertie lors d'une activation du dispositif (28) de freinage ABS, et pour la relâcher à nouveau lors d'une désactivation du dispositif (28) de freinage ABS.

5. Dispositif de freinage ABS selon la revendication 4, **caractérisé en ce que** le dispositif d'arrêt (37) est réalisé selon l'une des revendications 2 ou 3.

6. Dispositif de freinage ABS selon la revendication 4 ou la revendication 5, **caractérisé en ce qu'**un élément (29) de freinage ABS présente un actionneur (30) apte à être commandé ou réglé, qui est conçu pour être agencé et agir sur un câble de frein (23, 24) menant à un frein de roue (13) ou sur un actionneur de frein (57) situé dans ou sur un frein de roue (13).

7. Dispositif de freinage ABS selon l'une des revendications 4 à 6, **caractérisé en ce que** le dispositif (28) de freinage ABS présente un support (58) apte à être monté sur la remorque de véhicule (1), sur lequel sont agencés lesdits un ou plusieurs éléments (29) de freinage ABS et un dispositif d'arrêt (37) avec un moyen d'arrêt (38) apte à être commandé, qui est conçu pour agir sur un transmetteur de freinage (21), notamment une tringle de frein, de la chaîne (18) de transmission de freinage mécanique et mobile par inertie, le dispositif d'arrêt (37) étant relié par une technique de commande au dispositif (28) de freinage ABS, notamment à la commande d'ABS (33).

8. Dispositif de freinage ABS selon l'une des revendications 4 à 7, **caractérisé en ce que** le dispositif (28) de freinage ABS est combiné avec un dispositif (46) de freinage anti-patinage.

9. Dispositif de freinage ABS selon la revendication 8, **caractérisé en ce que** le dispositif (46) de freinage anti-patinage comporte un ou plusieurs éléments (47) de freinage anti-patinage, une commande anti-patinage (51) et un système de détection (52) anti-patinage, qui comprend de préférence un capteur de taux de lacet (53) et un capteur d'accélération transversale (54), de préférence lesdits un ou plusieurs éléments (47) de freinage anti-patinage présentant chacun un actionneur (48) avec un entraînement (49) de préférence commandable et un moyen de réglage (50) agissant sur la chaîne (18) de transmission de freinage.

10. Dispositif de freinage ABS selon la revendication 9, **caractérisé en ce que** le dispositif (28) de freinage ABS et le dispositif (46) de freinage anti-patinage présentent un actionneur commun (30, 48) et de préférence une commande commune (33, 51).

11. Dispositif de freinage ABS selon l'une des revendications 8 à 10, **caractérisé en ce que** le dispositif (28) de freinage ABS et le dispositif (46) de freinage anti-patinage sont conçus ensemble pour être agencés et agir sur un actionneur de frein (57) dans un frein de roue (13) ou sur un câble de frein (23, 24) menant à un frein de roue (13), en particulier pour agir ensemble sur une butée commune (27) ou sur des butées individuelles des câbles de frein (23, 24), le dispositif (28) de freinage ABS et le dispositif (46) de freinage anti-patinage étant de préférence conçus pour déplacer la butée commune (27) ou les butées individuelles (27) à partir d'une position zéro (55) aptes à être fixée pour le freinage par inertie, pour le freinage ABS et pour le freinage anti-patinage selon des directions d'actionnement opposées (a, s).

12. Procédé d'arrêt pour une remorque de véhicule (1) en situation d'attelage, la remorque de véhicule (1) présentant des roues de véhicule (12) avec des freins de roue (13) et un dispositif (14) de freinage de service, le dispositif (14) de freinage de service comprenant un dispositif (16) de freinage par inertie et un dispositif (28) de freinage ABS, qui effectue un freinage ABS en cas de freinage par inertie et de blocage des roues du véhicule (12), le dispositif (16) de freinage par inertie présentant une chaîne (18) de transmission de freinage mécanique et mobile par inertie menant aux freins de roue (13) et le dispositif (28) de freinage ABS présentant un ou plusieurs éléments (29) de freinage ABS agissant sur les freins de roue (13), un système (34) de détection ABS et une commande d'ABS (33), lesdits un ou plusieurs éléments (29) de freinage ABS relâchant et serrant les freins de roue (13) lors d'une activation du dispositif (28) de freinage ABS et lors du freinage ABS, **caractérisé en ce que** la chaîne (18) de transmission de freinage et son mouvement d'inertie sont arrêtés par un dispositif d'arrêt (37) lors du freinage par inertie et d'un freinage ABS effectué alors que le dispositif (28) de freinage ABS est activé, et sont à nouveau relâchés à la fin du freinage ABS et d'une désactivation du dispositif (28) de freinage ABS.

13. Procédé de freinage ABS d'une remorque de véhicule (1) en situation d'attelage, la remorque de véhicule (1) présentant des roues de véhicule (12) avec des freins de roue (13) et un dispositif (16) de freinage par inertie avec une chaîne (18) de transmission de freinage mécanique et mobile par inertie menant aux freins de roue (13), le dispositif (28) de freinage ABS agissant lors du freinage par inertie et du blocage des roues du véhicule (12) et comprenant un ou plusieurs éléments (29) de freinage ABS agissant sur les freins de roue (13), un système (34) de détection ABS et une commande d'ABS (33), lesdits un ou plusieurs éléments (29) de freinage ABS desserrant et serrant les freins de roue (13) lors d'une activation du dispositif (28) de freinage ABS, **caractérisé en ce que**, lors du freinage ABS, la chaîne de transmission de freinage mécanique (18) et son mouvement d'inertie sont arrêtés lors d'une activation du dispositif (28) de freinage ABS, au moyen d'un dispositif d'arrêt (37) relié au dispositif (28) de freinage ABS, en particulier à la commande d'ABS (33), par une technique de commande, et sont à nouveau relâchés lors d'une désactivation du dispositif (28) de freinage ABS.

14. Dispositif de freinage de service pour une remorque de véhicule présentant des roues de véhicule (12) avec des freins de roue (13), le dispositif (14) de freinage de service comprenant un dispositif (16) de freinage par inertie et un dispositif (28) de freinage ABS aptes à agir lors du freinage par inertie et du blocage des roues de véhicule (12), le dispositif (16) de freinage par inertie présentant une chaîne (18) de transmission de freinage mécanique et mobile par inertie menant aux freins de roue (13) et le dispositif (28) de freinage ABS présentant un ou plusieurs éléments (29) de freinage ABS agissant sur les freins de roue (13), un système (34) de détection ABS et une commande d'ABS (33), lesdits un ou plusieurs éléments (29) de freinage ABS relâchant et serrant les freins de roue (13) lors d'une activation du dispositif (28) de freinage ABS, **caractérisé en ce que** le dispositif (28) de freinage ABS est réalisé selon l'une des revendications 4 à 11.

15. Remorque de véhicule présentant des roues de véhicule (12) avec des freins de roue (13) et un dispositif (14) de freinage de service avec un dispositif (16) de freinage par inertie et un dispositif (28) de freinage ABS aptes à agir lors du freinage par inertie et du blocage des roues de véhicule (12), le dispositif (16) de freinage par inertie présentant une chaîne (18) de transmission de freinage mécanique et mobile par inertie menant aux freins de roue (13) et le dispositif (28) de freinage ABS présentant un ou plusieurs éléments (29) de freinage ABS agissant sur les freins de roue (13), un système (34) de détection ABS et une commande ABS (33), lesdits un ou plusieurs éléments (29) de freinage ABS relâchant et serrant les freins de roue (13) lors d'une activation du dispositif (28) de freinage ABS, **caractérisé en ce que** le dispositif (28) de freinage ABS est réalisé selon l'une des revendications 4 à 11.
